(19) Europäisches Patentamt
European Patent Office
Office européen des brevets

(11) **EP 4 542 459 A1**

(12) **EUROPEAN PATENT APPLICATION**
published in accordance with Art. 153(4) EPC

(43) Date of publication:
**23.04.2025  Bulletin 2025/17**

(21) Application number: **23823680.6**

(22) Date of filing: **30.05.2023**

(51) International Patent Classification (IPC):
**G06N 10/60** (2022.01)    **G06N 99/00** (2019.01)
**G06Q 10/04** (2023.01)

(52) Cooperative Patent Classification (CPC):
**G06N 10/60; G06N 99/00; G06Q 10/04**

(86) International application number:
**PCT/JP2023/019999**

(87) International publication number:
**WO 2023/243386 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **15.06.2022   JP 2022096385**

(71) Applicant: **Sony Group Corporation**
**Tokyo 108-0075 (JP)**

(72) Inventors:
• **UENO, Hiroshi**
  **Tokyo 108-0075 (JP)**
• **TEZUKA, Hiroyuki**
  **Tokyo 108-0075 (JP)**
• **TANAKA, Yu**
  **Tokyo 108-0075 (JP)**
• **TETSUKAWA, Hiroki**
  **Tokyo 108-0075 (JP)**

(74) Representative: **D Young & Co LLP**
**3 Noble Street**
**London EC2V 7BQ (GB)**

(54) **INFORMATION PROCESSING DEVICE, INFORMATION PROCESSING METHOD, AND PROGRAM**

(57)    An information processing apparatus according to an embodiment includes an inference unit that estimates, from among two or more solvers, a solver suitable for solving a mathematical formula generated from a combinational optimization problem model.

FIG.3

EP 4 542 459 A1

## Description

Field

The present disclosure relates to an information processing apparatus, an information processing method, and a program.

Background

In recent years, an information processing apparatus that solves a combinational optimization problem expressed by a Hamiltonian such as an Ising model using an Ising machine has been developed. Examples of the information processing apparatus using the Ising machine include a quantum annealer, a non-quantum annealer (also referred to as a quantum idea annealer), a non-annealing Ising machine, and a combination optimization algorithm (hereinafter, referred to as a gate-type quantum computer + QAOA) in which a gate-type quantum computer and a QAOA(Quantum approximate optimization algorithm) are combined.

Citation List

Patent Literature

Patent Literature 1: WO 2016/199220 A

Summary

Technical Problem

The information processing apparatuses (hereinafter, also referred to as "solvers") such as the quantum annealer, the non-quantum annealer, the non-annealing Ising machine, and the gate-type quantum computer + QAOA described above are designed by different algorithms. Therefore, there are problems that are good and bad depending on the characteristics of the algorithm.
However, it is difficult to know in advance which solver is suitable for a certain optimization problem. Therefore, there is no guarantee that the user who wants to solve the optimization problem selects the solver suitable for the optimization problem, and there is a problem that the solution obtained by the solver is not necessarily the optimum solution or the solution close to the optimum solution.
Therefore, the present disclosure proposes an information processing apparatus, an information processing method, and a program that enable acquisition of an optimum solution or a solution closer to the optimum solution.

Solution to Problem

In order to solve the above problem, an information processing apparatus according to one embodiment of the present disclosure includes an inference unit that estimates, from among two or more solvers, a solver suitable for solving a mathematical formula generated from a combinational optimization problem model.

Brief Description of Drawings

FIG. 1 is a block diagram illustrating a schematic configuration example of an information processing system according to an embodiment of the present disclosure.
FIG. 2 is a diagram illustrating an example of a schematic flow of a preliminary learning stage according to the present embodiment.
FIG. 3 is a diagram illustrating an example of a schematic flow of a service provision stage according to the present embodiment.
FIG. 4 is a diagram illustrating an example of a configuration of a problem model according to the present embodiment.
FIG. 5 is a diagram illustrating an example of Ising machine selection information according to the present embodiment.
FIG. 6 is a diagram illustrating an example of a creation tool according to the present embodiment.
FIG. 7 is a diagram illustrating an example of text expression for setting a constraint condition according to the present embodiment.

FIG. 8 is a diagram for describing a flow when an objective term in constraint conditions according to the present embodiment is set using a GUI.

FIG. 9 is a diagram for describing a flow when a constraint term in the constraint conditions according to the present embodiment is set using a GUI.

FIG. 10 is a diagram illustrating a display example of a solution of a max cut problem according to the present embodiment.

FIG. 11 is a diagram illustrating a display example of a solution of a traveling salesman problem according to the present embodiment.

FIG. 12 is a diagram for explaining a case where a combinational optimization problem model is a traveling salesman problem in the present embodiment (part 1).

FIG. 13 is a diagram for explaining a case where the combinational optimization problem model is a traveling salesman problem in the present embodiment (part 2).

FIG. 14 is a diagram for explaining a case where the combinational optimization problem model is a traveling salesman problem in the present embodiment (part 3).

FIG. 15 is a diagram for explaining a case where the combinational optimization problem model is a traveling salesman problem in the present embodiment (part 4).

FIG. 16 is a diagram for explaining a case where the combinational optimization problem model is a graph coloring problem in the present embodiment (part 1).

FIG. 17 is a diagram for explaining a case where the combinational optimization problem model is a graph coloring problem in the present embodiment (part 2).

FIG. 18 is a diagram for explaining a case where the combinational optimization problem model is a graph coloring problem in the present embodiment (part 3).

FIG. 19 is a diagram for explaining a case where the combinational optimization problem model is a maximum clique problem in the present embodiment (part 1).

FIG. 20 is a diagram for explaining a case where the combinational optimization problem model is a maximum clique problem in the present embodiment (part 2).

FIG. 21 is a diagram for explaining a case where the combinational optimization problem model is a maximum clique problem in the present embodiment (part 3).

FIG. 22 is a diagram for explaining a case where the combinational optimization problem model is a maximum clique problem in the present embodiment (part 4).

FIG. 23 is a diagram for explaining a case where the combinational optimization problem model is a maximum clique problem in the present embodiment (part 5).

FIG. 24 is a diagram for explaining a case where the combinational optimization problem model is a maximum clique problem in the present embodiment (part 6).

FIG. 25 is a diagram for explaining a case where the combinational optimization problem model is a max-cut problem in the present embodiment (part 1).

FIG. 26 is a diagram for explaining a case where the combinational optimization problem model is a max-cut problem in the present embodiment (part 2).

FIG. 27 is a diagram for explaining a case where the combinational optimization problem model is a max-cut problem in the present embodiment (part 3).

FIG. 28 is a sequence diagram for explaining a system configuration and operation according to a first example of the present embodiment.

FIG. 29 is a sequence diagram for explaining a system configuration and an operation according to a second example of the present embodiment.

FIG. 30 is a sequence diagram for explaining a system configuration and an operation according to a third example of the present embodiment.

FIG. 31 is a sequence diagram for explaining a system configuration and an operation according to a fourth example of the present embodiment.

FIG. 32 is a hardware configuration diagram illustrating an example of an information processing apparatus that executes various processing according to the present disclosure.

Description of Embodiments

Hereinafter, embodiments of the present disclosure will be described in detail with reference to the drawings. Note that, in the following embodiment, the same parts are denoted by the same reference numerals, and redundant description will be omitted.

Furthermore, the description of the present disclosure will be made according to the following item order.

0.Introduction

1. One embodiment

1.1 System schematic configuration example

1.2 Schematic flow example

1.2.1 Preliminary learning stage

1.2.2 Service provision stage

1.3 Configuration of problem model 114/214

1.4 Problem scale and complexity 115/215

1.5 Solution 111 to 113/223

1.6 Ising machine selection information 221

1.7 Example of GUI for creating combinational optimization problem model

1.8 Setting example of constraint conditions by program

1.9 Setting example of constraint conditions by GUI

1.9.1 Setting example of objective term

1.9.2 Setting example of constraint term

1.10 Display example of solution

1.11 Example of conversion from combinational optimization problem model to Ising model

1.11.1 Traveling salesman problem

1.11.2 Graph coloring problem

1.11.3 Maximum clique problem

1.11.4 Max-cut problem

1.12 System configuration example

1.12.1 First example

1.12.2 Second example

1.12.3 Third example

1.12.4 Fourth example

2. Hardware configuration

0.Introduction

In a solver such as a quantum annealer, a non-quantum annealer (also referred to as a quantum idea annealer), a non-annealing ising machine, or a gate-type quantum computer + QAOA that solves a combinational optimization problem expressed by a Hamiltonian such as an Ising model using an Ising machine, there may be a problem that is good and a problem that is bad due to the characteristics of the algorithm. Therefore, there is a case where it is difficult to select a solver suitable for a certain optimization problem in advance.

Here, it is conceivable to select an optimum solver after solving the problem in all the solvers, but this requires enormous time and cost. In addition, even in the same problem, the tendency of the problem changes when the input data is different, and thus the optimum solver specified for certain input data is not necessarily optimum for other input data. Under these circumstances, it cannot be said to be an effective means to select an optimum solver by solving in all solvers in advance.

Therefore, in the following embodiment, it is possible to specify in advance which solver is suitable for a certain optimization problem. As a result, the user can select a solver capable of acquiring an optimum solution or a solution closer to the optimum solution without requiring a huge amount of time and cost.

1. One embodiment

Hereinafter, an information processing apparatus, an information processing method, and a program according to an embodiment of the present disclosure will be described in detail with reference to the drawings.

1.1 System schematic configuration example

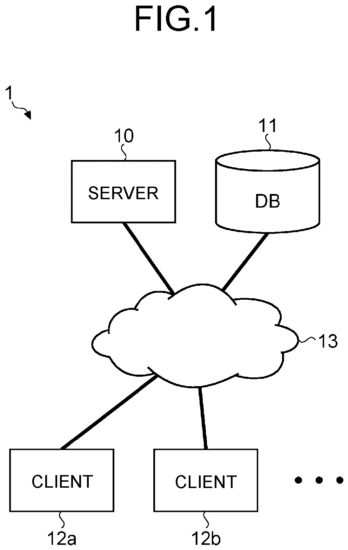

FIG. 1 is a block diagram illustrating a schematic configuration example of an information processing system according to the present embodiment. As illustrated in FIG. 1, an information processing system 1 has a configuration in which a server 10, a database (DB) 11, and one or more clients 12a, 12b,... (hereinafter, in a case where the individual clients 12a, 12b,... are not distinguished, the reference numeral is 12) are communicably connected to each other via a network 13.

The network 13 may be, for example, various networks capable of mutual communication, such as a wired or wireless local area network (LAN) (including WiFi), a wide area network (WAN), the Internet, a mobile communication system (including 4G(4th Generation Mobile Communication System), 4G-LTE (Long Term Evolution), 5G, and the like), Bluetooth (registered trademark), and infrared communication.

The server 10 is an example of an information processing apparatus according to the present disclosure, for example, and realizes a service that provides a user with an optimal solver for a certain combinational optimization problem or information for selecting the optimal solver from among a plurality of solvers, or a solution obtained by an optimal solver for a certain combinational optimization problem. Note that the server 10 may include one server or a plurality of servers. Furthermore, the server 10 may include one or more cloud servers arranged on the network 13.

The client 12 is an information processing apparatus for the user to acquire a solution to a certain combinational optimization problem using a service provided by the server 10, and may be, for example, a personal computer, a smartphone, a tablet terminal, a head mounted display (HMD), or the like.

1.2 Schematic flow example

Next, a flow of services using the information processing system 1 according to the present embodiment will be described. The service according to the present embodiment includes a preliminary learning stage for training a learning model for proposing an optimal solver to a user, and a service provision stage for proposing or providing an optimal solver to the user by using a learned model, or providing a solution derived by using an optimal solver selected on the basis of an output from the learned model to the user. Note that, for simplification of description, in the following, the solver will be described as an Ising machine, but the Ising machine is not limited to an Ising machine such as a quantum annealer, a non-quantum annealer, or a non-annealing Ising machine, and other solvers such as a gate-type quantum computer + QAOA may be included.

1.2.1 Preliminary learning stage

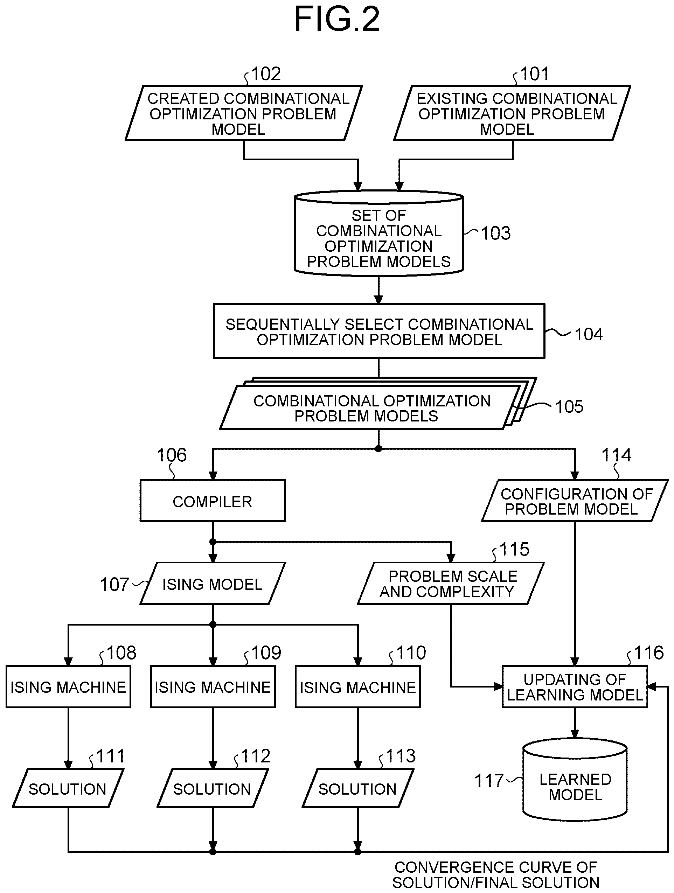

FIG. 2 is a diagram illustrating an example of a schematic flow of a preliminary learning stage according to the present embodiment. As illustrated in FIG. 2, in the preliminary learning stage according to the present embodiment, as preparation for providing a service to the user, a learning model for estimating which solver is suitable for each of various combinational optimization problem models is trained.

In the specific procedure, first, an existing combinational optimization problem model 101 or a newly created combinational optimization problem model 102 is collected, so that a set 103 of combinational optimization problem models is created.

A combinational optimization problem model 105 is sequentially selected from the set 103 of combinational optimization problem models (step 104). The selected combinational optimization problem model 105 is input to a compiler (also referred to as a converter) 106. In addition, the configuration 114 of the selected combinational optimization problem model 105 is used for updating 116 of the learning model and used for learning of the learning model or relearning of the learned model. Note that, in the following description, a processor in which the learning model and the learned model are executed or a region on the processor is also referred to as an inference unit. In addition, the learning model and the learned model may be a mathematical model using machine learning. However, the inference unit is not limited to a learned model using machine learning, and may be variously changed such as a processing unit that estimates an optimum solver using a statistical method from a combination of an optimization problem accumulated in the past, a solver, and a score obtained when the optimization problem is solved by each solver.

The compiler 106 compiles the input combinational optimization problem model 105 to convert the combinational optimization problem model 105 into an Ising model 107 expressed by a mathematical formula such as the Hamiltonian. Note that the Ising model in the present description may be quadratic unconstrained binary optimization (QUBO). The created Ising model 107 is input to each of two or more Ising machines 108 to 110 prepared in advance. Note that the compiler 106 may generate a plurality of Ising models 107 from one combinational optimization problem model 105. In that case, each of the plurality of generated Ising models 107 may be input to two or more Ising machines 108 to 110 to be solved.

As described above, each of the Ising machines 108 to 110 may be various solvers such as a quantum annealer, a non-quantum annealer, a non-annealing Ising machine, or a gate-type quantum computer + QAOA. In addition, each of the Ising machines 108 to 110 may be an Ising machine provided from the same or different vendors, and a providing form thereof may be various forms such as a web service (including a cloud service) and download.

The solutions 111 to 113 respectively output from the Ising machines 108 to 110 with respect to the input of the Ising model 107 are provided for updating 116 of the learning model and used for learning of the learning model or relearning of the learned model. Each of these solutions 111 to 113 may include information such as a convergence curve of a solution in addition to a solution finally obtained as an output. Note that, in a case where a plurality of Ising models 107 are generated from one combinational optimization problem model 105, in the updating 116 of the learning model, learning of the learning model or relearning of the learned model may be executed using a solution obtained by solving each of the plurality of Ising models 107.

In addition, the compiler 106 specifies information (hereinafter, also referred to as problem scale and complexity 115) on the scale, complexity, and the like of the combinational optimization problem model 105 to be compiled. The specified problem scale and complexity 115 is provided for updating 116 of the learning model and used for learning of the learning model or relearning of the learned model.

In the updating 116 of the learning model, the learning model or the learned model is learned or relearned using a combination of at least one of the configuration 114 of the input problem model and the problem scale and complexity 115 and the solutions 111 to 113 from the Ising machines 108 to 110 as teacher data. The updating 116 of the learning model may be executed by a learning unit in the server 10 or the client 12.

By executing the above process on one or more or all of the combinational optimization problem models 105 included in the set 103 of combinational optimization problem models, the estimation accuracy of a learned model 117 is improved. The service provision to the user is performed using the learned model 117.

1.2.2 Service provision stage

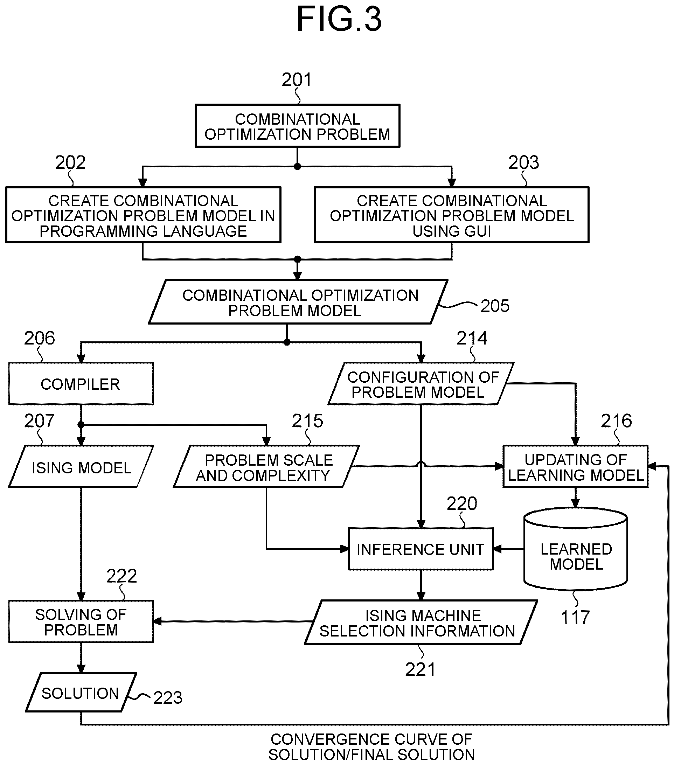

FIG. 3 is a diagram illustrating an example of a schematic flow of a service provision stage according to the present embodiment. As illustrated in FIG. 3, in the service provision stage according to the present embodiment, the user creates a combinational optimization problem model 205 from a combinational optimization problem 201 for which an optimal solution is desired to be obtained. Note that, in a case where the combinational optimization problem has already been modeled, the step (202, 203) of creating the combinational optimization problem model 205 from the combinational optimization problem 201 may be omitted.

As a method of creating the combinational optimization problem model 205 from the combinational optimization problem 201, various methods such as a method of creating the combinational optimization problem model 205 by describing the combinational optimization problem 201 in a programming language (step 202), a method of creating the combinational optimization problem model 205 from the combinational optimization problem 201 using a creation tool such as a graphical user interface (GUI) or a creation auxiliary tool (step 203), and the like may be used.

Furthermore, the steps 202 and 203 of creating the combinational optimization problem model 205 from the combinational optimization problem 201 may be executed in a processing unit (also referred to as a model creating unit) in the server 10 or the client 12. For example, in step 202, the model creating unit may provide the user with an environment for describing the combinational optimization problem model 205 in a programming language. Furthermore, in step 203, the model creating unit may provide the user with a GUI for creating the combinational optimization problem model 205 or assisting creation of the combinational optimization problem model 205.

The created combinational optimization problem model 205 is input to a compiler 206 and converted into an Ising model 207. Furthermore, a configuration 214 of the created combinational optimization problem model 205 may be input to an inference unit 220 and used for updating 216 of the learning model to be used for relearning of the learned model. Note that the compiler 206 may generate a plurality of Ising models 207 similarly to the compiler 106.

The inference unit 220 may be realized by executing the learned model 117 trained in the preliminary learning stage on the processor. In addition to the configuration 214 of the problem model described above, information about the scale, complexity, and the like of the combinational optimization problem model 205 specified at the time of compiling by the compiler 206 (the problem scale and complexity 215) is also input to the inference unit 220. The inference unit 220 uses the configuration 214 of the problem model related to the combinational optimization problem model 205 to be solved and the problem scale and complexity 215 as inputs, and outputs an inference result indicating which Ising machine (solver) is suitable for solving the combinational optimization problem model 205. Note that the problem scale and complexity 215 specified at the time of compilation may be used for updating 216 of the learning model and used for relearning of the learned model.

The inference result output from the inference unit 220 is given to solving 222 of the problem as Ising machine selection information 221. In the solving 222 of the problem, the solving of the Ising model 207 is executed using the Ising machine designated by the Ising machine selection information 221. In the case of the present example, the Ising machine designated by the Ising machine selection information 221 may be any of the Ising machines 108 to 110 in FIG. 2. Note that the input of the Ising model 207 to the designated Ising machine may be executed by a control unit of the server 10 or the client 12.

A solution 223 output from the Ising machine in the solving 222 of the problem is provided to the user. Furthermore, the solution 223 may be used for updating 216 of the learning model and used for relearning of the learned model 117. Note that the solution 223 may include information such as a convergence curve of the solution in addition to the solution finally obtained as the output.

Note that the inference unit 220 is not limited to the above-described method based on machine learning using the learned model 117, and may estimate an optimal Ising machine using a statistical method. That is, the inference unit 220 may be configured to specify the Ising machine estimated to be most effective for the combination of the combinational optimization problem model to be solved and the input data on the basis of the accumulated data (such as the combinational optimization problem model and the correspondence between the combination of the input data and the solution) related to the solving by the Ising machine executed in the past.

In the updating 216 of the learning model, the learned model is relearned using a combination of at least one of the configuration 214 of the problem model and the problem scale and complexity 215 and the solution 223 obtained from the Ising machine designated by the Ising machine selection information 221 as teacher data, so that the accuracy of the learned model is improved. The updating 216 of the learning model may be executed by a learning unit in the server 10 or the client 12.

1.3 Configuration of problem model 114/214

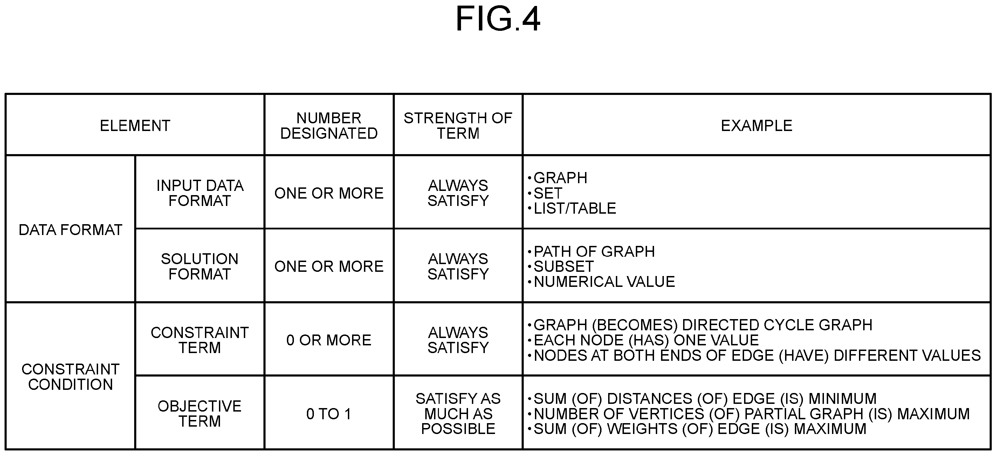

Next, the configuration 114/214 of the above-described problem model will be described. FIG. 4 is a diagram illustrating an example of a configuration of a problem model according to the present embodiment. As illustrated in FIG. 4, the configuration 114/214 of the problem model, that is, the constituent elements of the combinational optimization problem model may include a data format and a constraint condition. The data format may include a format of input data and a format of a solution, and the constraint condition may include a constraint term and an objective term.

The format of the input data may be, for example, information specifying a data format of a combinational optimization problem, such as a graph, a set, a list, or a table.

The format of the solution may be, for example, information specifying the format of the solution acquired by the Ising machine, such as a path, a subset, or a numerical value of a graph.

The constraint term may be, for example, information specifying a constraint to be satisfied by the solution, a constraint on the data structure of the solution, or the like, such as "graph (becomes) a directed cycle graph", "each node (has) one value", or "(nodes at both ends of an edge (have) different values".

The objective term may be, for example, information specifying a condition to be satisfied by the solution, such as "sum (of) distances (of) an edge (is) minimum", "number of vertices (of) a partial graph (is) maximum", and "sum (of) weights (of) an edge (is) maximum".

The number of each of the input data formats, the solution formats, the constraint terms, and the objective terms can be designated. In the example illustrated in FIG. 4, "one or more" is designated as the number of input data formats, "one or more" is designated as the number of solution formats, "0 or more" is designated as the number of constraint terms, and "0 to 1" is designated as the number of objective terms.

In each of the input data format, the solution format, the constraint term, and the objective term, the strength of the term is set as its attribute. In the example illustrated in FIG. 4, "always satisfy" is set to the input data format, the solution format, and the constraint term, and "satisfy as much as possible" is set to the objective term.

In the above configuration, the data format is converted into a constraint term as a constraint for expression with a binary variable. For example, in a case where the input data format is "graph", the solution format is "path of graph", "one or more" is set to the number designated for each, and "always satisfy" is set to the strength of the term, the data format is converted into a constraint term for imposing a constraint that "one cycle and orders of all nodes are two".

1.4 Problem scale and complexity 115/215

The problem scale and complexity 115/215 described above may include, for example, the number of variables and the number of interactive coefficients constituting the combinational optimization problem model 105/205. In addition, the problem scale and complexity 115/215 may include a range (digit) of numerical values of the input data. This is because the range of numerical values that can be handled or are good at may be different depending on the Ising machine. Note that the number of interactive coefficients may be the number of edges connecting nodes or the like. The range may be a range specified by the number of digits in binary or 10 such as 0 to 255 or 128 to 1023.

1.5 Solution 111 to 113/223

As described above, the solutions 111 to 113/223 output from the Ising machines 108 to 110 in FIG. 2 and the Ising machine used in the solving 222 of problem in FIG. 3 may include information such as a convergence curve of the solution in addition to the solution finally obtained as the output from each Ising machine. The convergence curve of the solution may be a value of an energy function at a constant number of iterations or at a constant elapsed time during the solving by the Ising machine. In this case, the convergence curve of the solution may be estimated from the value of the energy function at a constant number of iterations or at a constant elapsed time.

1.6 Ising machine selection information 221

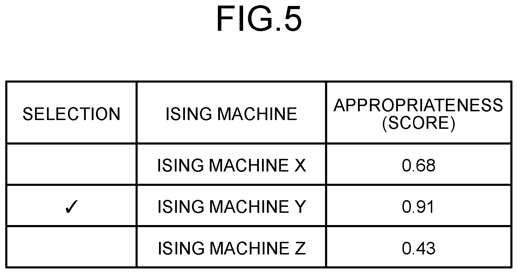

FIG. 5 is a diagram illustrating an example of the Ising machine selection information according to the present embodiment. As illustrated in FIG. 5, the Ising machine selection information 221 output from the inference unit 220 may include the appropriateness (score) for the combinational optimization problem model 105/205 estimated for each Ising machine (for example, the Ising machine 108 to 110 in FIG. 3). In that case, the user may select the Ising model for solving the combinational optimization problem model 205 on the basis of the appropriateness of each Ising machine provided as the Ising machine selection information 221. However, the present invention is not limited thereto, and the Ising machine selection information 221 may be variously modified, for example, by being configured with information for specifying or selecting an Ising model having the highest score.

However, the present invention is not limited thereto, and for example, the Ising machine can be configured to be selected by a text expression such as a programming language. For example, it may be configured to select an Ising machine having the highest appropriateness by a syntax such as "sampler = get_appropriate_samplers (problem) [0]". Furthermore, for example, it may be configured to select a specific Ising machine by a syntax such as "sasmper = get_sampler ("ising machine X")".

1.7 Example of GUI for creating combinational optimization problem model

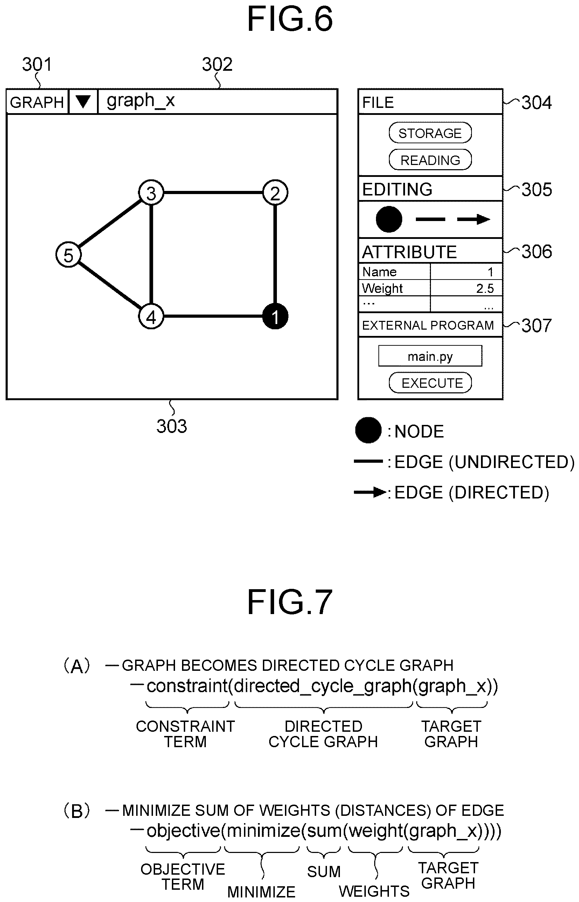

Next, for example, a creation tool (GUI) of the combinational optimization problem model 205 that may be used in step 203 illustrated in FIG. 3 will be described. FIG. 6 is a diagram illustrating an example of a creation tool according to the present embodiment.

As illustrated in FIG. 6, a GUI panel of the creation tool includes a region 301 for selecting an input data format, a region 302 for specifying a function to be associated with one or more pieces of input data being created, and a region 303 for visually displaying a configuration (a configuration of a problem model) of the input data being created/edited. Furthermore, the GUI panel may include a region 304 for inputting an instruction such as "storage" of a created or updated file or "reading" of a new file, a region 305 for performing an editing work such as addition of a new node, edge, or the like or deletion of an unnecessary node, edge, or the like, with respect to input data being created/edited, a region 306 for editing an attribute (name, value, or the like) of a node, an edge, or the like selected in the a region 303, and a region 307 for inputting an instruction such as fetching of data output from an external program.

However, as described above in step 202 of FIG. 3, it is also possible to create a combinational optimization problem model using text expression such as a programming language. In that case, the input data format may be specified by a type declaration of the variable, for example, as shown below.
Example: graph_x = Graph (data_from_networkx)

1.8 Setting example of constraint conditions by program

Next, a case where the constraint condition is set by text expression such as a programming language will be described. In the following description, for the sake of clarity, a case where the combinational optimization problem is a traveling salesman problem will be exemplified.

FIG. 7 is a diagram illustrating an example of text expression for setting a constraint condition according to the present embodiment, in which (A) illustrates an example of a case where "the graph becomes a directed cycle graph" is set as a constraint term of the constraint condition, and (B) illustrates an example of a case where "minimize the sum of weights (distances) of an edge" is set as an objective term.

As illustrated in (A), in a case where the constraint condition is expressed by text, for example, the constraint term "the graph becomes a directeed cycle graph" is described by a syntax that sets "directeed_cycle_graph" as the constraint defined by "constraint" and specifies "graph_x" in the target graph. That is, in the syntax, "constraint", "directeed_cycle_graph", and "graph_x" are described in this order.

In addition, as illustrated in (B), for example, the objective term of "minimize the sum of weights (distances) of an edge" is described by a syntax that sets "minimize" to the predicate of the objective term (objective) ", specifies "sum" of "the weights" to the objective term, and specifies "graph_x" to the target graph. That is, in the syntax, "objective", "minimize", "sum", "weight", and "graph_x" are described in this order. In such a syntax, "objective", "minimize", "sum", and "weight" correspond to the configuration of the problem model 114/214 described above.

1.9 Setting example of constraint conditions by GUI

Next, a case where a constraint condition is set using a GUI will be described. Note that, in the following description, similarly, for the sake of clarity, a case where the combinational optimization problem is a traveling salesman problem will be exemplified.

1.9.1 Setting example of objective term

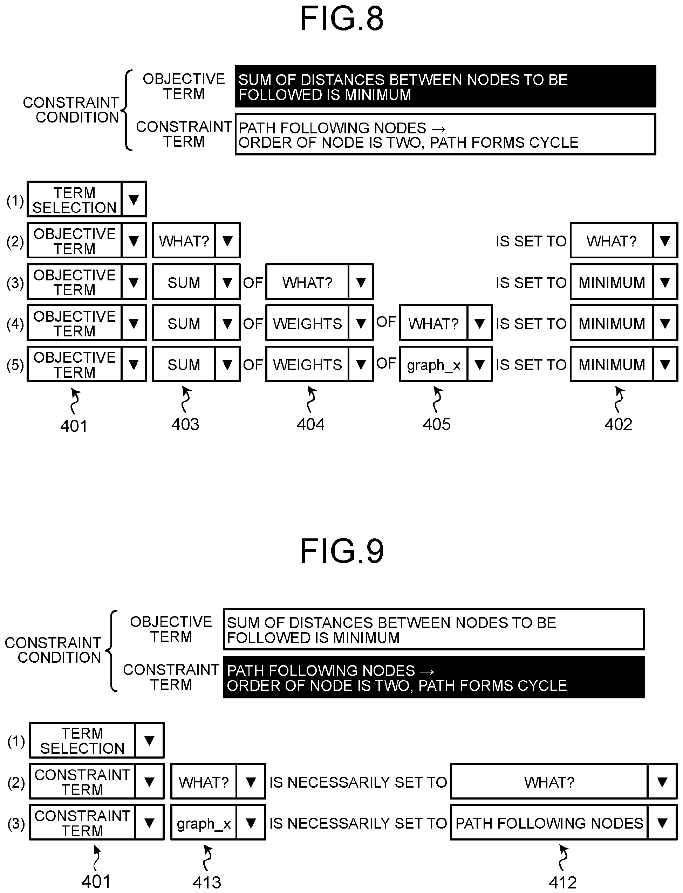

FIG. 8 is a diagram for describing a flow when an objective term is set using the GUI in the constraint condition. In FIG. 8, (1) to (5) indicate the order of selection items presented to the user.

As illustrated in (1) of FIG. 8, to the user, first, an input field 401 for setting either the "constraint term" or the "objective term" in the constraint condition is displayed. The input field 401 may be configured to allow selection of a "constraint term" and an "objective term" from a pull-down menu, or may be configured to allow setting by text input.

When an "objective term" is set in the input field 401 in (1) in FIG. 8, an input field 402 for setting a predicate and an input field 403 for setting an objective are displayed for the user to set a syntax (See, for example, (B) of FIG. 7.) as illustrated in (2). Note that the input field 402 and the input field 403 may be configured to display selection candidates by a pull-down menu, or may be configured to be settable by text input. Furthermore, in a case where a pull-down menu is used, selection candidates presented to the user may be narrowed down from settings for other items to candidates.

In (2) of FIG. 8, in a case where "minimum " is set in the input field 402 of the predicate and "sum" is set in the input field 403 of the objective, it is unknown what the sum is, and the objective is incomplete. Therefore, as illustrated in (3), an input field 404 for additionally setting a shortage ("For what?") of the objective is displayed to the user. That is, in the present embodiment, the GUI is configured such that when an item necessary for completing the syntax is insufficient, an input field for setting the item is sequentially added. Note that the input field 404 may be configured to display selection candidates by a pull-down menu as described above, or may be configured to be settable by text input.

In (3) of FIG. 8, when "weight" is set in the input field 404 of the objective and the objective is completed, an input field 405 for setting the target graph is displayed to the user as illustrated in (4). Note that the input field 405 may be configured to display selection candidates by a pull-down menu as described above, or may be configured to be settable by text input.

Then, as illustrated in (5) of FIG. 8, when "graph_x" is set in the input field 405 for setting the target graph and the syntax is completed, the objective term ("minimize the sum of weights (distances) of the edge") in the constraint condition is set.

However, in a case where a weight is not set to a node or an edge in the target graph "graph_x" which is the input data, for example, the GUI illustrated in FIG. 6 may be presented to the user to prompt the user to set an insufficient weight to the node or the edge.

Furthermore, in the example illustrated in FIG. 8, the case where the syntax of the objective term is set in the order of the predicate, the objective, and the target graph has been exemplified, but the present invention is not limited thereto. For example, various modifications may be made such that the syntax is set in the order of the target graph, the objective, and the predicate. At that time, in a case where there is a contradiction in syntax after or during creation, a warning may be issued each time to guide the user to create a correct syntax.

1.9.2 Setting example of constraint term

FIG. 9 is a diagram for describing a flow of setting a constraint term using the GUI in the constraint condition. In FIG. 9, (1) to (3) indicate the order of selection items presented to the user.

As in (1) in FIG. 8, the user first displays the input field 401 for setting either the "constraint term" or the "objective term" in the constraint condition (see (1) in FIG. 9).

In (1) of FIG. 9, when the "constraint term" is set in the input field 401, an input field 412 for setting the constraint and an input field 413 for setting the target graph are displayed for the user to set the syntax (see, for example, (A) of FIG. 7) as illustrated in (2). Note that the input field 412 and the input field 413 may be configured to display selection candidates by a pull-down menu as described above, or may be configured to be settable by text input.

In (2) of FIG. 9, when "path following nodes" is set in the input field 412 of the constraint and "graph_x" is set in the input field 413 for setting the target graph to complete the syntax, the constraint term (necessarily set as "path following nodes") in the constraint condition is set.

Note that, in a case where the combinational optimization problem is a traveling salesman problem, a superordinate concept of "necessarily set as "path following nodes"" set as the constraint term is replaced with a subordinate concept of "the order of the node is two, and the path forms a cycle". In this way, by providing the function of dropping the item set by the superordinate concept into the subordinate concept, it is possible to set the constraint with contents that are easy for the user to understand.

In addition, the number of target graphs selected in (3) of FIG. 9 is not limited to one, and may be plural. In this case, an input field for setting a graph to be added may be newly displayed. However, it is assumed that one or more target graphs include a graph selected as the target graph when the objective term is set.

As described above, it is possible to interactively create a combinational optimization problem model by utilizing the GUI for setting the constraint condition. In addition, since necessary information can be grasped in advance on the information processing system 1 side, the information processing system 1 can actively inquire of the user about necessary information. As a result, the combinational optimization problem model can be constructed without excess or deficiency. Furthermore, it is possible not only to narrow down options to be presented next as a constraint condition depending on the constraint condition and the input data format that have already been input, but also to prompt the user to input a new necessary constraint condition or input format information in relation to the input constraint condition, so that setting work by the user can be made efficient. Furthermore, by configuring the item set by the superordinate concept to be dropped into the subordinate concept on the information processing system 1 side, the user can input the constraint condition at the expression level used for the problem to be solved instead of the level close to the mathematical formula like the Ising model, and thus, more users can use the information processing system 1 without requiring specialized knowledge.

1.10 Display example of solution

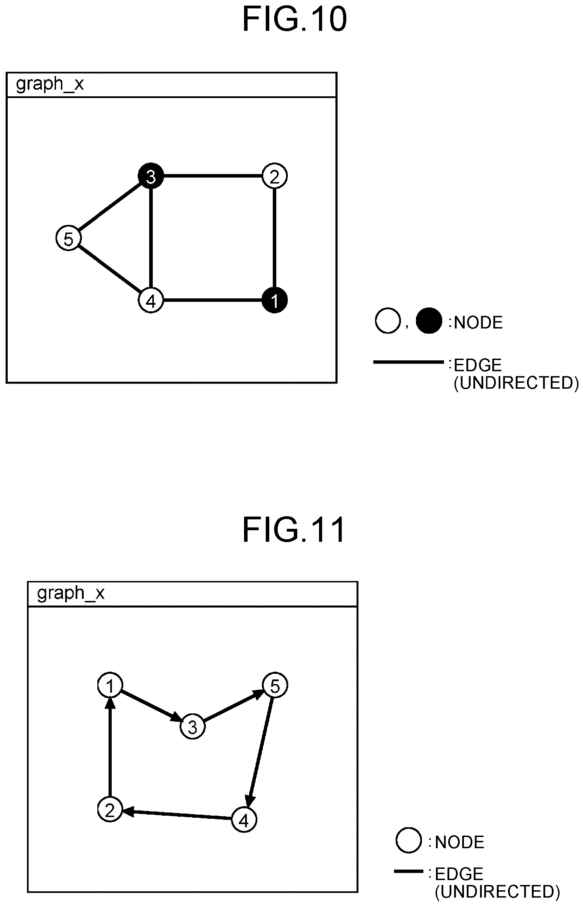

Next, a display example of the solution 223 obtained by the solving 222 of the problem in FIG. 3 will be described. FIGS. 10 and 11 are diagrams illustrating a display example of a solution according to the present embodiment. Note that FIG. 10 is a diagram illustrating a display example of a solution in a case where the combinational optimization problem is the Max-cut problem, and FIG. 11 is a diagram illustrating a display example of a solution in a case where the combinational optimization problem is the traveling salesman problem.

As illustrated in FIG. 10, in the problem of classifying the nodes in the graph such as the Max-cut problem, the nodes are color-coded (in FIG. 10, the coating is crushed and the white is removed) for each classification, whereby the solution 223 obtained by the solving 222 of the problem (see FIG. 3) may be visually expressed.

As illustrated in FIG. 11, in the problem of obtaining the path of the graph such as the traveling salesman problem, the solution 223 obtained by the solving 222 of the problem (see FIG. 3) may be visually expressed by expressing the obtained order of the path by a number attached to a node, an edge, or the like, an edge with an arrow, or the like.

However, the method of presenting the solution 223 to the user as illustrated in FIGS. 10 and 11 is not limited to the method of visualizing using a GUI or the like, and various changes such as text expression may be made. For example, in the case of the Max-cut problem, an identifier (number or the like) may be attached to the node in advance as in "[2, 4, 5], [1, 3]", and the node classified by the solving may be provided to the user by a method such as enclosing the node in parentheses. Furthermore, in the case of the traveling salesman problem, the traveling salesman problem may be presented to the user by a method in which an identifier (number or the like) is attached to the node in advance, and the orders of the nodes followed in the obtained path are described in order from the left.

1.11 Example of conversion from combinational optimization problem model to Ising model

Next, the conversion from the combinational optimization problem model to the Ising model will be described using some specific examples.

1.11.1 Traveling salesman problem

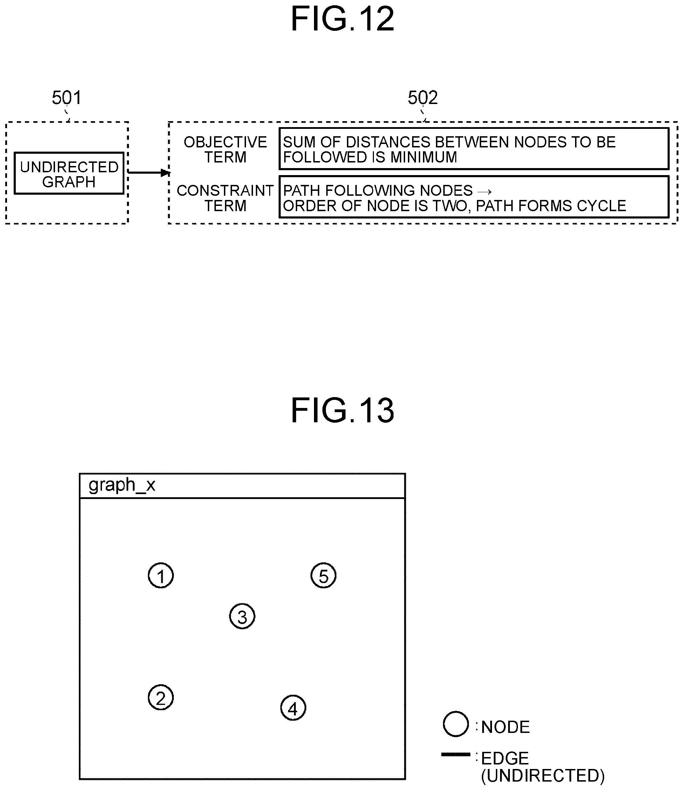

First, the case of the traveling salesman problem will be specifically described. The traveling salesman problem is a problem of searching for a route of the shortest distance that always passes through N (N is an integer of 2 or more) cities once. FIGS. 12 to 15 are diagrams for explaining a case where the combinational optimization problem model is a traveling salesman problem in the present embodiment.

In the present embodiment, first, as illustrated in FIG. 12, a constraint condition 502 is set for input data 501. In the present example, the input data 501 may be an undirected graph in which a positional relationship of two or more nodes not connected by an edge is described as illustrated in FIG. 13, and the nodes may be cities to be followed.

Next, with respect to the input data 501 as described above, an edge is defined between all the nodes, and a weight according to a distance is added between the nodes. Thereby, the traveling salesman problem is described in the combinational optimization problem model (step 102 in FIG. 2, step 202 or 203 in FIG. 3).

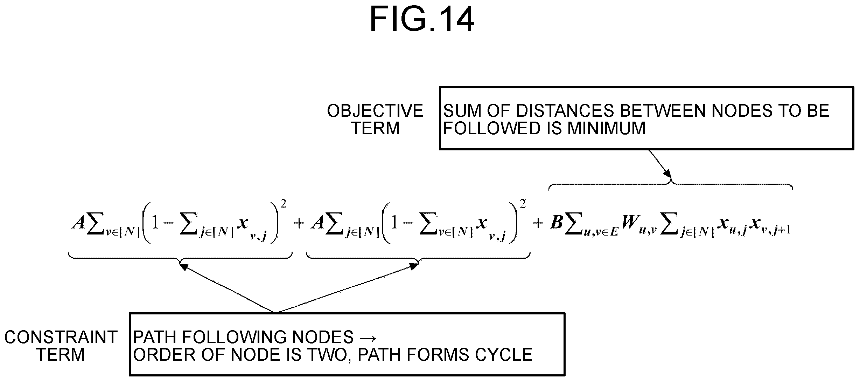

As illustrated in FIG. 14, the created combinational optimization problem model is compiled by a compiler (compiler 106 in FIG. 2, compiler 206 in FIG. 3), thereby generating a mathematical formula (also referred to as a code) corresponding to the Ising model (Ising model 107 of FIG. 2, Ising model 207 of FIG. 3). In FIG. 14, the left two terms are codes of the constraint term, and the right one term is a code of the objective term. Note that "The graph forms a directed cycle" set by the user as the constraint term may be replaced with "The order of the node is two, and the path forms a cycle" that can be expressed by a mathematical formula, and then mathematized.

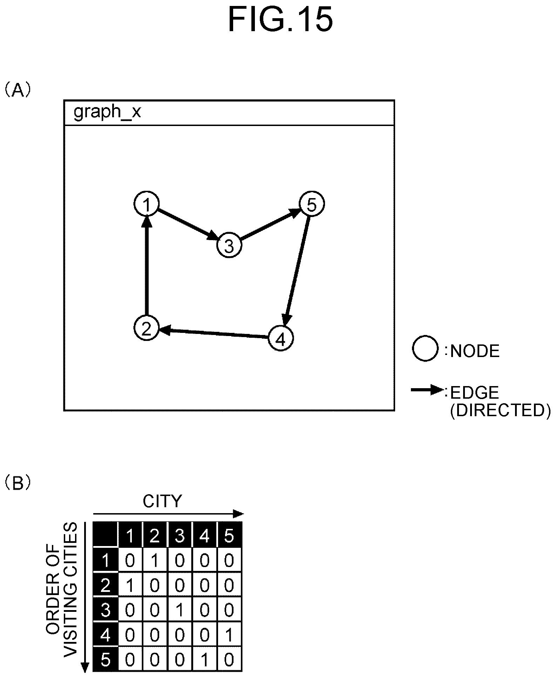

As described above, the solution (solution 111 to 113 in FIG. 2, solution 223 in FIG. 3) of the traveling salesman problem can be obtained by solving the Ising model expressed by the mathematical formula using the Ising machine (Ising machine 108 to 110 in FIG. 2, Ising machine in solving 222 of the problem in FIG. 3). Note that the solution may be presented to the user in a directed graph in which an edge has a direction as illustrated in (A) of FIG. 15, may be presented to the user using a combination table or the like as illustrated in (B), or may be presented to the user using text expression or the like as described above.

1.11.2 Graph coloring problem

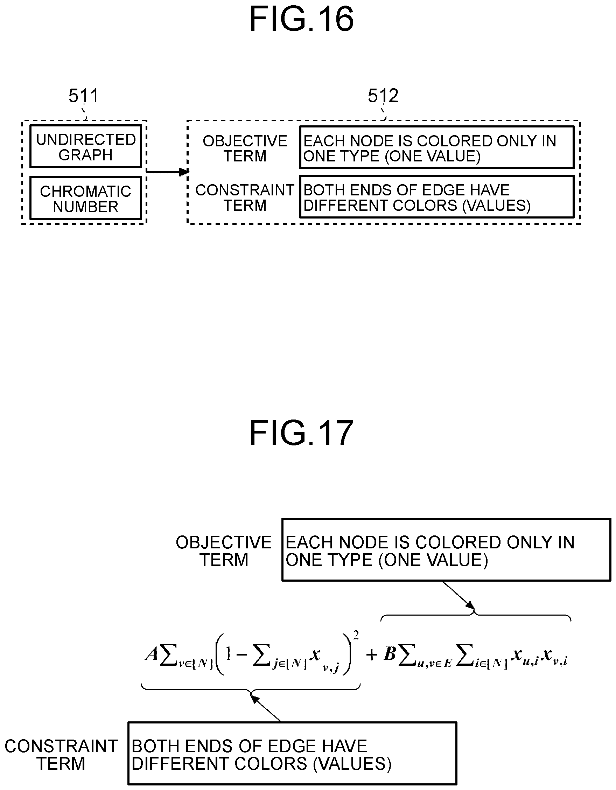

Next, the graph coloring problem will be specifically described. The graph coloring problem is a problem of determining whether N (N is an integer of 2 or more) nodes can be painted in M colors (M is an integer of 2 or more) so that adjacent nodes do not have the same color. FIGS. 16 to 18 are diagrams for explaining a case where the combinational optimization problem model is a graph coloring problem in the present embodiment.

In the present embodiment, first, as illustrated in FIG. 16, a constraint condition 512 is set for input data 511. In the present example, the input data 511 may include an undirected graph and a chromatic number. Similarly to the traveling salesman problem, the undirected graph may be a graph in which a positional relationship between two or more nodes not connected by an edge is described. In addition, the chromatic number may be the number of colors used for color-coding of nodes.

Next, with respect to the input data 511 as described above, an edge is defined between nodes that are not colored in the same color. Thereby, a graph coloring problem is described in the combinational optimization problem model (step 102 in FIG. 2, step 202 or 203 in FIG. 3).

As illustrated in FIG. 17, the created combinational optimization problem model is compiled by a compiler (compiler 106 in FIG. 2, compiler 206 in FIG. 3), thereby generating a mathematical formula (also referred to as a code) corresponding to the Ising model (Ising model 107 of FIG. 2 and Ising model 207 of FIG. 3). In FIG. 17, one term on the left side is a code of a constraint term, and one term on the right end is a code of an objective term.

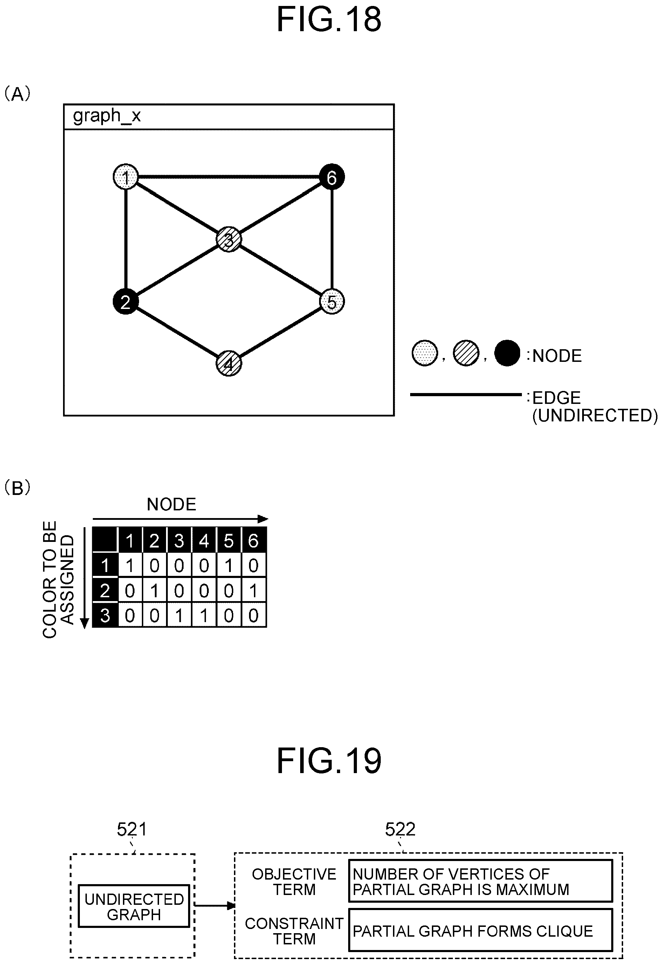

As described above, the solution (solution 111 to 113 in FIG. 2, solution 223 in FIG. 3) of the graph coloring problem can be obtained by solving the Ising model expressed by the mathematical formula using the Ising machine (Ising machine 108 to 110 in FIG. 2, Ising machine in solving 222 of the problem in FIG. 3). Note that the solution may be presented to the user in a graph in which nodes are color-coded as illustrated in (A) of FIG. 18, may be presented to the user using a combination table or the like as illustrated in (B), or may be presented to the user using text expression or the like as described above.

1.11.3 Maximum clique problem

Next, the maximum clique problem will be specifically described. The maximum clique problem is a problem of finding the maximum clique among cliques (a set of nodes satisfying a condition that there is an edge between any two nodes) in a graph. FIGS. 19 to 24 are diagrams for describing a case where the combinational optimization problem model is the maximum clique problem in the present embodiment.

In the present embodiment, first, as illustrated in FIG. 19, by setting the constraint condition 522 for input data 521, the maximum clique problem is described by the combinational optimization problem model (step 102 in FIG. 2, step 202 or 203 in FIG. 3). In the present example, the input data 521 may be an undirected graph. The undirected graph may be a graph describing a positional relationship between two or more nodes connected by an edge.

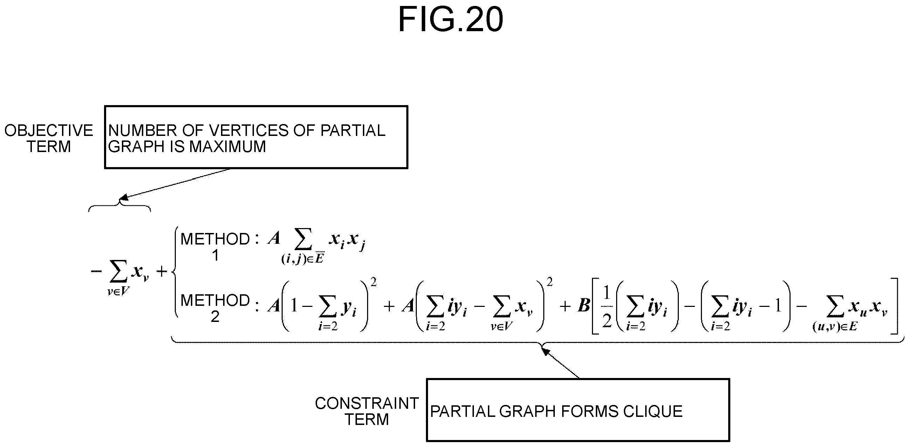

Next, as illustrated in FIG. 20, the created combinational optimization problem model is compiled by a compiler (compiler 106 in FIG. 2, compiler 206 in FIG. 3), thereby generating a mathematical formula (also referred to as a code) corresponding to the Ising model (Ising model 107 of FIG. 2, Ising model 207 of FIG. 3). In FIG. 20, one term on the left side is a code of a constraint term, and one term on the right end is a code of an objective term.

Here, as a method of formulating the objective term, a plurality of methods can be considered. In the present description, two of a plurality of methods will be described as an example.

· Method 1

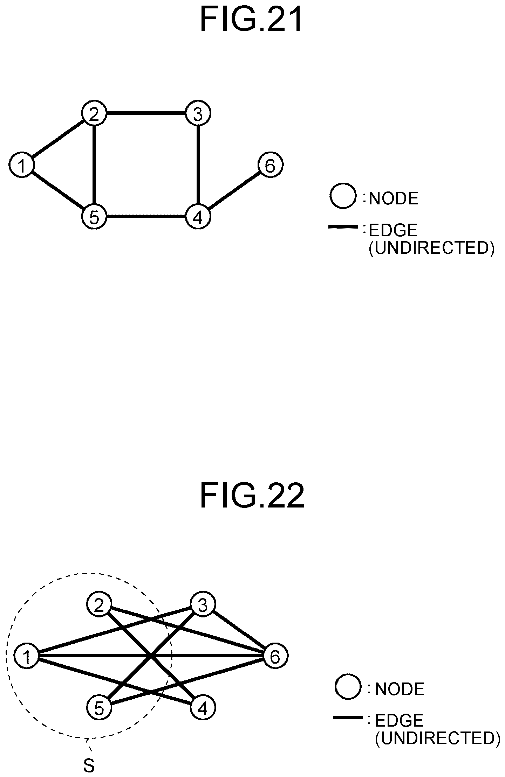

First, the case 1 will be described. FIGS. 21 to 23 are diagrams for explaining Method 1. FIG. 21 illustrates an original undirected graph G which is the input data 521, and FIG. 22 illustrates a complement graph H of the undirected graph G illustrated in FIG. 21. In FIG. 22, the independent set S of the complement graph H (a set of nodes not connected by an edge between any nodes) may have the same meaning as the clique of the undirected graph G.

When the independent set S exists in the complement graph H illustrated in FIG. 22, the following Formula (1) is established.

$$-\sum_{(i,j)\in\overline{E}} x_i x_j = 0 \qquad \cdots (1)$$

Therefore, in the method 1, the Ising model obtained by compiling the created combinational optimization problem model is as the following Formula (2).

$$-\sum_{v\in V} x_v + A \sum_{(i,j)\in\bar{E}} x_i x_j \qquad \cdots (2)$$

· Method 2

Next, the method 2 will be described. In the method 2, a graph in which the number of edges is k(k-1)/2 in k (k is an integer of 3 or more) nodes is defined as a clique. Here, when the node forming the clique is set to $x_v = 1$, the definition of the clique can be expressed by the following Formula (3).

$$\text{a. } x_v \text{ OF } K \text{ NODES OUT OF } n \text{ NODES IS 1}$$

$$-\left(K-\sum_{v\in V} x_v\right)^2 = 0$$

b. NUMBER OF SIDES IN WHICH $x_v$ AT BOTH END POINTS OF EDGE IS 1 IS $\dfrac{K(K-1)}{2}$ $\qquad \cdots (3)$

$$-\left[\frac{K(K-1)}{2}-\sum_{(u,v)\in E} x_u x_v\right] = 0$$

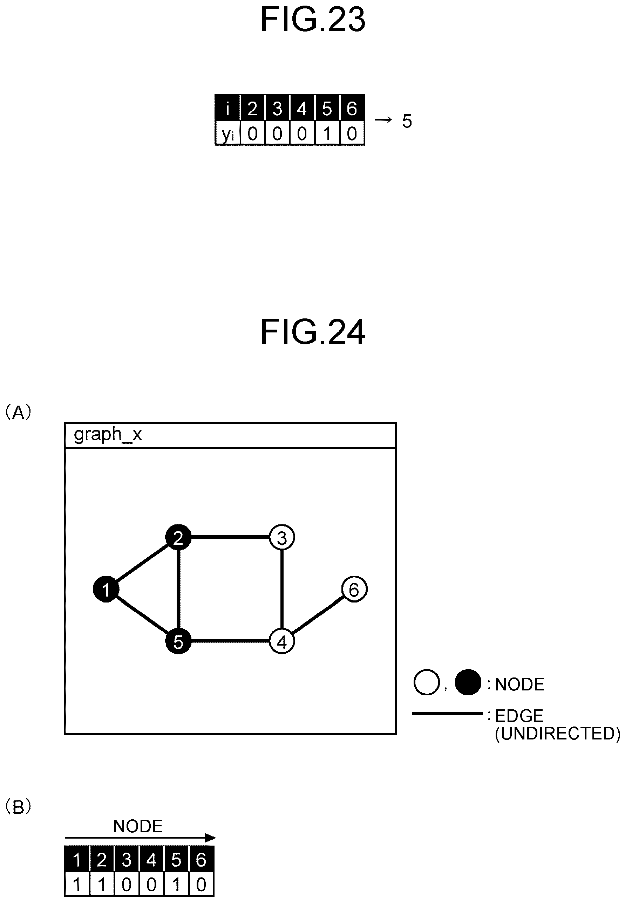

Then, when a slack variable (see the following Formula (4)) representing the number of nodes k as illustrated in FIG. 23 is introduced, the above-described Formula (3) can be expressed as the following Formula (5).

$$-K = \sum_{i=2} iy_i,$$

$$-\left(1-\sum_{i=2} y_i\right)^2 = 0 \qquad \cdots (4)$$

$$\text{a. }\left(\sum_{i=2} iy_i - \sum_{v\in V} x_v\right)^2 = 0$$

$$\text{b. }\left[\frac{1}{2}\left(\sum_{i=2} iy_i\right)\left(\sum_{i=2} iy_i - 1\right)-\sum_{(u,v)\in E} x_u x_v\right] = 0 \qquad \cdots (5)$$

Therefore, in the method 2, the Ising model obtained by compiling the created combinational optimization problem model is as the following Formula (6).

$$-\sum_{v\in V} x_v + A\left(1-\sum_{i=2} y_i\right)^2 + A\left(\sum_{i=2} iy_i - \sum_{v\in V} x_v\right)^2 + B\left[\frac{1}{2}\left(\sum_{i=2} iy_i\right)-\left(\sum_{i=2} iy_i - 1\right)\sum_{(u,v)\in E} x_u x_v\right] \qquad \cdots (6)$$

As described above, the solution (solution 111 to 113 in FIG. 2, solution 223 in FIG. 3) of the maximum clique problem can be obtained by solving the Ising model expressed by the mathematical formula using the Ising machine (Ising machine 108 to 110 in FIG. 2, Ising machine in solving 222 of the problem in FIG. 3). Note that the solution may be presented to the user in a graph in which nodes are color-coded as illustrated in (A) of FIG. 24, may be presented to the user using a table or the like as illustrated in (B), or may be presented to the user using text expression or the like as described above.

1.11.4 Max-cut problem

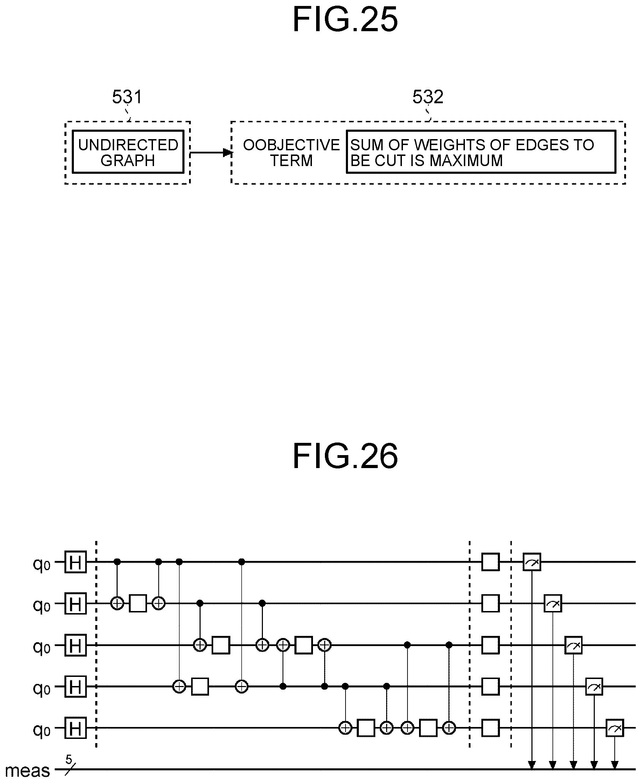

Next, the max-cut problem will be specifically described. The max-cut problem is a problem of obtaining a classification method that maximizes the sum of the weights of the cut edges in a case where the nodes of the graph are classified into two groups. FIGS. 25 to 27 are diagrams for describing a case where the combinational optimization problem model is a max-cut problem in the present embodiment.

In the present embodiment, first, as illustrated in FIG. 25, a constraint condition 532 is set for input data 531, so that a max-cut problem is described by a combinational optimization problem model (step 102 in FIG. 2, step 202 or 203 in FIG. 3). In the present example, the input data 531 may be an undirected graph. The undirected graph may be a graph describing a positional relationship between two or more nodes connected by an edge.

Next, as illustrated in FIG. 21, the created combinational optimization problem model is compiled by a compiler (compiler 106 in FIG. 2, compiler 206 in FIG. 3). Here, in a case where the Ising machine is an annealing type such as a quantum annealer or a non-quantum annealer, the created combinational optimization problem model may be converted into an Ising model as shown in the following Formula (7).

$$H = -\frac{1}{2} \sum_{(i,j) \in E} W_{i,j}\left(1 - s_i s_j\right) \qquad \cdots (7)$$

On the other hand, in a case where the Ising machine is a non-annealing type such as a gate-type quantum computer + QAOA, the created combinational optimization problem model may be converted into a program (a connection relationship of gates or the like) for solving the Hamiltonian represented by the following Formula (8) by a quantum circuit as illustrated in FIG. 26. Note that, in the present description, for convenience, it is assumed that a program for solving the Hamiltonian with a quantum circuit is also included in the Ising model, and a quantum circuit obtained by developing the program is also included in the Ising machine.

$$H_{cost} = -\frac{1}{2} \sum_{i,j} W_{i,j}\left(1 - \sigma_i^z \sigma_j^z\right) \qquad \cdots (8)$$

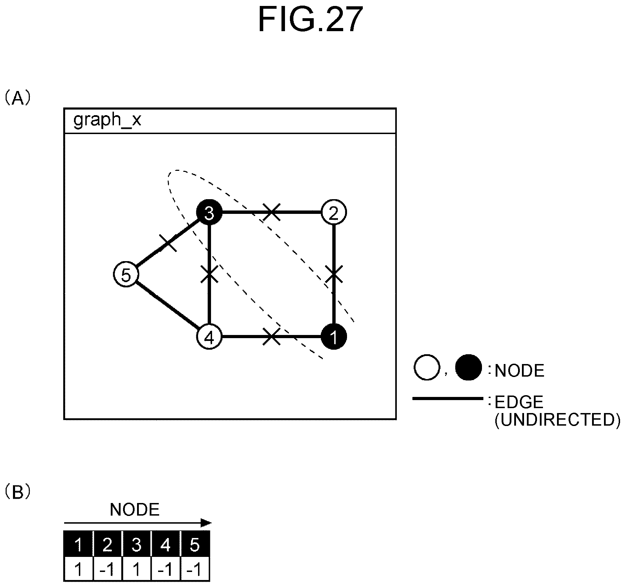

As described above, the solution (solution 111 to 113 in FIG. 2, solution 223 in FIG. 3) of the max-cut problem can be obtained by solving the Ising model expressed by the mathematical formula using the Ising machine (Ising machine 108 to 110 in FIG. 2, Ising machine in solving 222 of the problem in FIG. 3). Note that the solution may be presented to the user by a graph in which nodes are color-coded or a graph in which marks ($\times$) are attached to edges as illustrated in (A) of FIG. 27, may be presented to the user by using a table or the like as illustrated in (B), or may be presented to the user by using text expression or the like as described above.

1.12 System configuration example

Next, a configuration example of the information processing system 1 described above will be described with some examples. In the following description, the same components are denoted by the same reference numerals, and a detailed description thereof will be omitted. In the following description, reference numerals used in the description of FIG. 3 are appropriately used to clarify a correspondence relationship with the configuration illustrated in FIG. 3.

1.12.1 First example

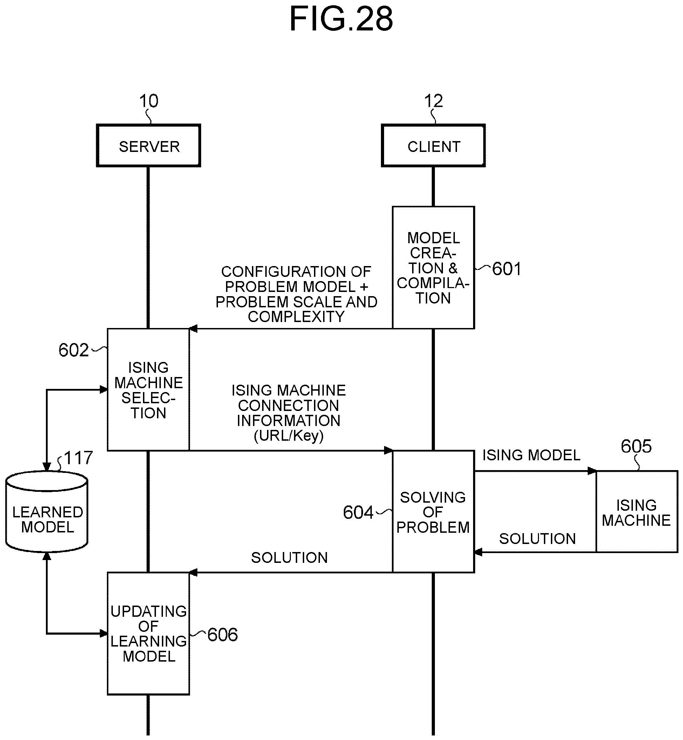

FIG. 28 is a sequence diagram for explaining a system configuration and an operation according to the first example. In the first example illustrated in FIG. 28, in the configuration illustrated in FIG. 3, the inference unit 220 and the updating 216 of learning model are arranged in the server 10, and the combinational optimization problem model creation steps 202 and 203, the compiler 206, and solving 222 of the problem are arranged in the client 12. Note that the learned model 117 may be disposed in the server 10 or may be disposed in the database 11. In addition, the Ising machine in the solving 222 of the problem is not necessarily disposed in the client 12, and may be disposed on a server managed by the server 10 or a vendor of the Ising machine.

· Step 601

In the present example, the user first creates a combinational optimization problem model (corresponding to the combinational optimization problem model 205 in FIG. 5) in the client 12, and compiles the created combinational optimization problem model 205 to generate an Ising model (corresponding to the Ising model 207 in FIG. 3) (step 601). Note that, in step 601, the configuration of the combinational optimization problem model 205 (corresponding to the configuration 214 of the problem model in FIG. 3) and the scale and complexity of the combinational optimization problem model 205 (corresponding to the problem scale and complexity 215 in FIG. 3) are specified.

· Step 602

The configuration 214 of the problem model and the problem scale and complexity 215 specified in step 601 are transmitted to the server 10 via the network 13. In the server 10, the received configuration 214 of the problem model and the problem scale and complexity 215 are input to the inference unit 220 in which the learned model 117 is implemented, so that information (corresponding to the Ising machine selection information 221 in FIG. 3) for selecting an optimal Ising machine for solving the Ising model 207 is generated (step 602).

When the Ising machine selection information 221 is generated, the server 10 transmits the Ising machine connection information including information (URL: Uniform Resource Locator) for accessing the Ising machine selected by the Ising machine selection information 221 to the client 12. Note that, in a case where user authentication is required to use the Ising machine, user authentication information (key) for using the Ising machine may be included in the Ising machine connection information.

· Step 604

In the client 12 that has received the ising machine connection information, solving of the combinatorial optimization problem (corresponding to the solving 222 of the problem in FIG. 3) is executed (step 604). Specifically, the user accesses the Ising machine 605 on the network on the basis of the Ising machine connection information, and inputs the Ising model 207 generated in step 601 to the Ising machine 605. Note that the Ising machine 605 may be a service provided on a network in a form of a web application programming interface (API) or the like.

In the Ising machine 605, a solution (corresponding to the solution 223 in FIG. 3) of the Ising model 207 is obtained. The obtained solution 223 is transmitted to the client 12 via the network. Note that the solution 223 may include information such as a convergence curve in addition to the final solution as described above.

The user acquires the solution of the combinational optimization problem by receiving the solution 223 transmitted from the Ising machine 605 at the client 12.

· Step 606

The solution 223 obtained by the Ising machine 605 is sent from the client 12 to the server 10. In the server 10, the configuration 214 of the problem model and the problem scale and complexity 215 received from the client 12 in step 602, and the solution 223 are used as teacher data, and the updating 606 by relearning of the learned model 117 (corresponding to the updating 216 of the learning model in FIG. 3) is executed.

As described above, with the configuration in which the creation (step 601) of the combinational optimization problem model 205 is executed on the client 12 side, the user can create the combinational optimization problem model 205 without being affected by the situation of the network 13 or the like, so that the model creation work can be executed comfortably. In addition, by configuring the client 12 to execute the compiling (step 601) of the combinational optimization problem model 205 and the solving 222 (step 605) of the problem, transmission and/or reception of the Ising model 207 to and from the server 10 via the network 13 can be omitted. Therefore, effects such as reduction of network traffic and improvement of confidentiality can be obtained.

1.12.2 Second example

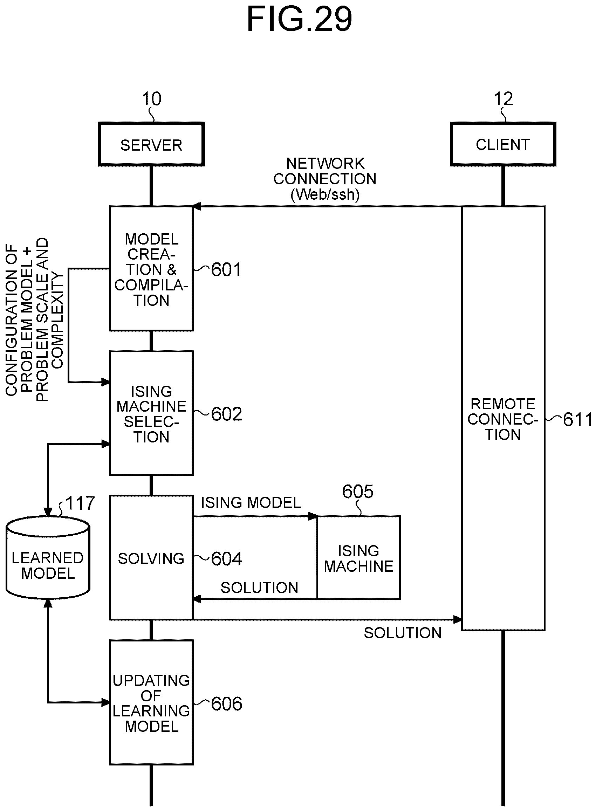

FIG. 29 is a sequence diagram for explaining a system configuration and an operation according to a second example. In the second example illustrated in FIG. 29, in the configuration illustrated in FIG. 3, the combinational optimization problem model creation steps 202 and 203, the compiler 206, the inference unit 220, updating 216 of the learning model, and the solving 222 of the problem are arranged in the server 10.

· Step 611

In the present example, the user remotely connects to the server 10 on the network 13 (step 611), and executes the following steps on the remotely connected server 10. Note that various forms such as ssh (Secure Shell) may be adopted for the remote connection to the server 10.

· Step 601

In step 601, the user creates the combinational optimization problem model 205 on the server 10 connected via the client 12, and compiles the created combinational optimization problem model 205 to generate the Ising model 207. Note that details of this step 601 may be similar to those of the first example.

· Step 602

In step 602, the server 10 generates the Ising machine selection information 221 by inputting the configuration 214 of the problem model and the problem scale and complexity 215 specified in step 601 to the inference unit 220 in which the learned model 117 is implemented.

· Step 604

In step 604, solving 222 of the problem is executed in the server 10. Specifically, the server 10 accesses the Ising machine 605 on the network on the basis of the information (URL) for accessing the Ising machine selected by the Ising machine selection information 221, and inputs the Ising model 207 generated in step 601 to the Ising machine 605. Then, the server 10 acquires the solution 223 obtained by the Ising machine 605. Note that the solution 223 may include information such as a convergence curve in addition to the final solution as described above.

The solution 223 obtained from the Ising machine 605 is transmitted to the client 12 via the network 13. The user acquires the solution of the combinational optimization problem by receiving the solution 223 transmitted from the server 10 at the client 12.

· Step 606

In step 606, the server 10 executes updating 216 of the learning model using the configuration 214 of the problem model, the problem scale and complexity 215, and the solution 223 acquired in step 604 specified in step 602 as teacher data.

As described above, by configuring the server 10 to execute all of the combinational optimization problem model creation steps 202 and 203, the compiler 206, the inference unit 220, the updating 216 of the learning model, and the solving 222 of the problem, it is possible to reduce the performance required for the client 12. As a result, it is possible to realize a service that can be used in more situations. Furthermore, since data transmitted and received between the server 10 and the client 12 can be suppressed to the minimum, effects such as reduction in network traffic and improvement in confidentiality can be obtained. Other configurations, operations, and effects may be similar to those of the first example described above.

1.12.3 Third example

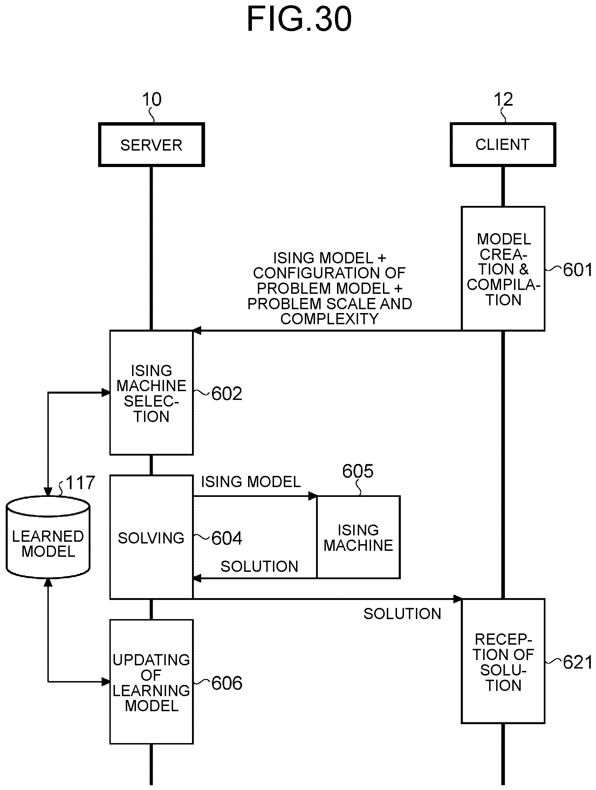

FIG. 30 is a sequence diagram for explaining a system configuration and an operation according to a third example. In the third example illustrated in FIG. 30, in the configuration illustrated in FIG. 3, the combinational optimization problem model creation steps 202 and 203 and the compiler 206 are arranged in the client 12, and the inference unit 220, the updating 216 of the learning model, and the solving 222 of the problem are arranged in the server 10.

· Step 601

In step 601, similarly to the first example, the user creates the combinational optimization problem model 205 in the client 12 and compiles the created combinational optimization problem model 205 to generate the Ising model 207.

· Step 602

In step 602, similarly to the first example, the server 10 generates the Ising machine selection information 221 by inputting the configuration 214 of the problem model and the problem scale and complexity 215 received from the client 12 to the inference unit 220 in which the learned model 117 is implemented.

· Step 604

In step 604, similarly to the second example, solving 222 of the problem is executed in the server 10. Specifically, the server 10 accesses the Ising machine 605 on the network on the basis of the information (URL) for accessing the Ising machine selected by the Ising machine selection information 221, and inputs the Ising model 207 generated in step 601 to the Ising machine 605. Then, the server 10 acquires the solution 223 obtained by the Ising machine 605. Note that the solution 223 may include information such as a convergence curve in addition to the final solution as described above.

· Step 621

The solution 223 obtained from the Ising machine 605 is transmitted to the client 12 via the network 13. The user acquires the solution of the combinational optimization problem by receiving the solution 223 transmitted from the server 10 at the client 12 (step 621).

· Step 606

In step 606, the server 10 executes updating 216 of the learning model using the configuration 214 of the problem model and the problem scale and complexity 215 received from the client 12 and the solution 223 acquired in step 604 as teacher data.

As described above, by configuring the inference unit 220, updating 216 of the learning model, and solving 222 of the problem to be executed on the server 10, it is possible to reduce the performance required for the client 12. Furthermore, it is also possible to suppress data transmitted and received between the server 10 and the client 12. Other configurations, operations, and effects may be similar to those of the first example or the second example described above.

1.12.4 Fourth example

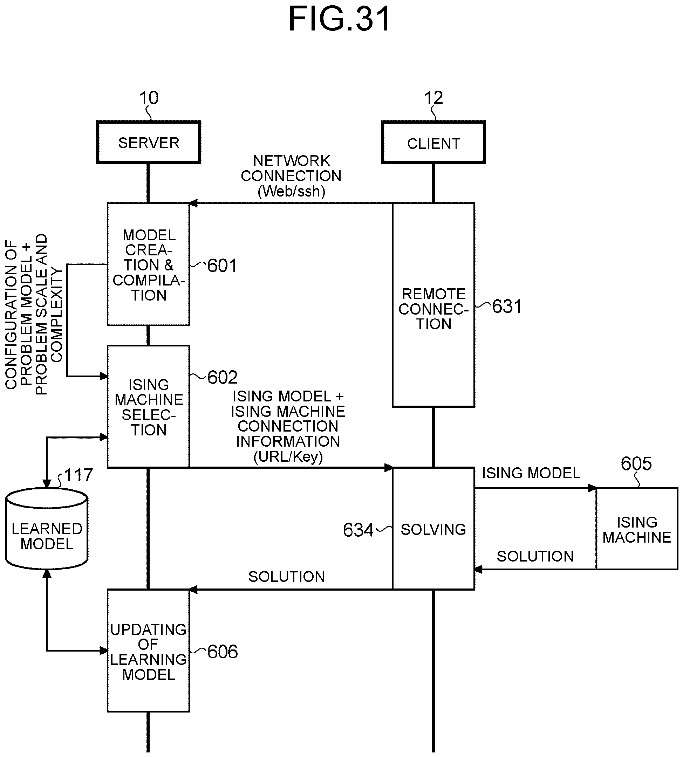

FIG. 31 is a sequence diagram for explaining a system configuration and an operation according to the fourth example. In the fourth example illustrated in FIG. 31, in the configuration illustrated in FIG. 3, the combinational optimization problem model creation steps 202 and 203, the compiler 206, the inference unit 220, and updating 216 of the learning model are arranged in the server 10, and solving 222 of the problem is arranged in the client 12.

· Step 631

In the present example, as in the second example, the user remotely connects to the server 10 on the network 13 (step 631), and executes the following steps on the server 10 that is remotely connected. Note that various forms such as ssh (Secure Shell) may be adopted for the remote connection to the server 10.

· Step 601

In step 601, similarly to the second example, the user creates the combinational optimization problem model 205 on the server 10 connected via the client 12, and compiles the created combinational optimization problem model 205 to generate the Ising model 207.

· Step 602

In step 602, similarly to the second example, the server 10 generates the Ising machine selection information 221 by inputting the configuration 214 of the problem model specified in step 601 and the problem scale and complexity 215 to the inference unit 220 in which the learned model 117 is implemented.

When the Ising machine selection information 221 is generated, the server 10 transmits the Ising machine connection information including information (URL) for accessing the Ising machine selected by the Ising machine selection information 221 and the Ising model 207 generated in step 601 to the client 12. Note that, in a case where user authentication is required to use the Ising machine, user authentication information (key) for using the Ising machine may be included in the Ising machine connection information.

· Step 634

In step 634, solving 222 of the problem is executed at the client 12. Specifically, the user accesses the Ising machine 605 on the network on the basis of the Ising machine connection information, and inputs the Ising model 207 received from the server 10 to the Ising machine 605.

In the Ising machine 605, as in the first example, a solution (corresponding to the solution 223 in FIG. 3) of the Ising model 207 is obtained and transmitted to the client 12 via the network. The user acquires the solution of the combinational optimization problem by receiving the solution 223 transmitted from the Ising machine 605 at the client 12. Note that the solution 223 may include information such as a convergence curve in addition to the final solution as described above.

· Step 606

In step 606, the server 10 executes updating 216 of the learning model using the configuration 214 of the problem model and the problem scale and complexity 215 specified in step 602, and the solution 223 received from the client 12 as teacher data.

As described above, by configuring the combinational optimization problem model creation steps 202 and 203, the compiler 206, the inference unit 220, and updating 216 of the learning model to be executed on the server 10, it is possible to reduce the performance required for the client 12. Furthermore, it is also possible to suppress data transmitted and received between the server 10 and the client 12. Other configurations, operations, and effects may be similar to those of the first example described above.

2. Hardware configuration

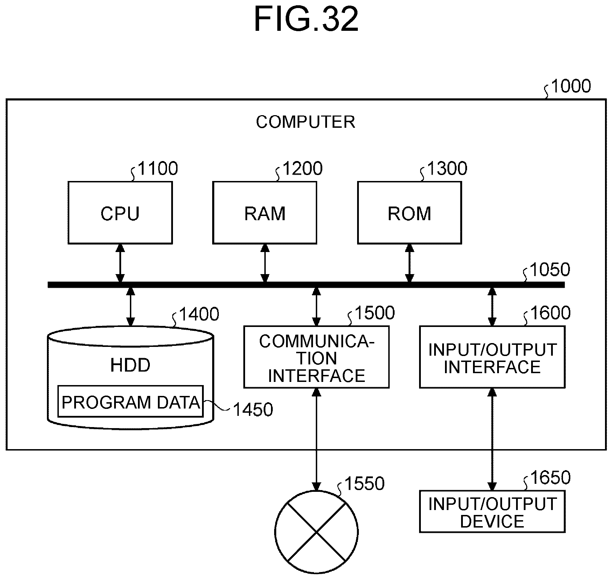

At least one of the server 10 and the client 12 according to the embodiment and the modifications can be realized by a computer 1000 having the configuration illustrated in FIG. 32, for example. FIG. 32 is a hardware configuration diagram illustrating an example of the computer 1000 that implements at least one function of the server 10 and the client 12. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records a program for executing each operation according to the present disclosure which is an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 has a configuration including an I/F unit 18 described above, and is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the server 10/client 12 according to the above-described embodiment, the CPU 1100 of the computer 1000 implements at least one function of the server 10/client 12 by executing a program loaded on the RAM 1200. In addition, the HDD 1400 stores a program and the like according to the present disclosure. Note that the CPU 1100 reads the program data 1450 from the HDD 1400 and executes the program data, but as another example, these programs may be acquired from another device via the external network 1550.

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined.

Furthermore, the effects of each embodiment described in the present specification are merely examples and are not limited, and other effects may be provided.

Furthermore, each of the above-described embodiments may be used alone, or may be used in combination with another embodiment.

Note that the present technology can also have the following configurations.

(1) An information processing apparatus comprising an inference unit that estimates, from among two or more solvers, a solver suitable for solving a mathematical formula generated from a combinational optimization problem model.

(2) The information processing apparatus according to (1), wherein
the inference unit uses a configuration of the combinational optimization problem model and a scale and complexity of the combinational optimization problem model as inputs to estimate the solver suitable for solving the mathematical formula.

(3) The information processing apparatus according to (2), wherein
the configuration of the combinational optimization problem model includes a data format and a constraint condition.

(4) The information processing apparatus according to (2) or (3), wherein
the scale and complexity of the combinational optimization problem model include at least one of a number of variables and a number of interactive coefficients constituting the combinational optimization problem model.

(5) The information processing apparatus according to any one of (1) to (4), wherein
the inference unit is a processing unit that estimates the solver suitable for solving the mathematical formula using a learned model using machine learning or a statistical method.

(6) The information processing apparatus according to any one of (1) to (5), wherein
the two or more solvers include at least one of a quantum annealer, a non-quantum annealer, a non-annealing Ising machine, and a gate quantum-type computer.

(7) The information processing apparatus according to any one of (1) to (6), further comprising
a converter that generates the mathematical formula from the combinational optimization problem model.

(8) The information processing apparatus according to any one of (1) to (7), wherein
the mathematical formula is quadratic unconstrained binary optimization (QUBO).

(9) The information processing apparatus according to any one of (1) to (8), further comprising
a learning unit that inputs the mathematical formula into the solver suitable for solving the mathematical formula to improve accuracy of the inference unit on a basis of a solution of the mathematical formula obtained from the solver.

(10) The information processing apparatus according to (9), wherein
in a case where a plurality of mathematical formulas can be generated from the combinational optimization problem model, the learning unit inputs each of the mathematical formulas generated from the combinational optimization problem model to the solver suitable for the solving, to improve the accuracy of the inference unit on a basis of a solution of each of the mathematical formulas obtained from the solver.

(11) The information processing apparatus according to any one of (1) to (10), further comprising
a control unit that acquires a solution of the mathematical formula by inputting the mathematical formula to the solver suitable for solving the mathematical formula.

(12) The information processing apparatus according to any one of (1) to (11), further comprising
a model creating unit that creates the combinational optimization problem model on a basis of a combinational optimization problem.

(13) The information processing apparatus according to (12), wherein
the model creating unit provides a user with an environment for describing the combinational optimization problem model in a programming language.

(14) The information processing apparatus according to (12), wherein
the model creating unit provides a user with a graphical user interface (GUI) for creating the combinational optimization problem model or assisting creation of the combinational optimization problem model.

(15) The information processing apparatus according to (14), wherein

the GUI presents a candidate that can be set as a constraint condition of the combinational optimization problem model to the user for each item, and
the model creating unit creates a syntax describing the constraint condition on a basis of a candidate for each of the items selected from among the candidates presented by the GUI.

(16) The information processing apparatus according to (15), wherein
the GUI presents candidates that can be set as the constraint condition to the user according to an order of items constituting a syntax describing the constraint condition.

(17) The information processing apparatus according to (15) or (16), wherein
the model creating unit issues a warning to the user when a candidate selected by the user using the GUI causes inconsistency in syntax of the constraint condition being created.

(18) The information processing apparatus according to any one of (15) to (17), wherein

the constraint condition includes a constraint term and an objective term, and
the model creating unit causes the user to create the constraint term and the objective term.

(19) An information processing apparatus connected to the information processing apparatus according to any one of (1) to (11) via a predetermined network, the information processing apparatus comprising

a model creating unit that creates the combinational optimization problem model on a basis of a combinational optimization problem.

(20) The information processing apparatus according to (19), wherein

the model creating unit provides a user with an environment for describing the combinational optimization problem model in a programming language.

(21) The information processing apparatus according to (19), wherein

the model creating unit provides a user with a graphical user interface (GUI) for creating the combinational optimization problem model or assisting creation of the combinational optimization problem model.

(22) The information processing apparatus according to (21), wherein

the GUI presents candidates that can be set as a constraint condition of the combinational optimization problem model to the user for each item, and

the model creating unit creates a syntax describing the constraint condition on the basis of a candidate for each of the items selected from among the candidates presented by the GUI.

(23) The information processing apparatus according to (22), wherein

the GUI presents candidates that can be set as the constraint condition to the user according to an order of items constituting a syntax describing the constraint condition.

(24) The information processing apparatus according to (22) or (23), wherein

the model creating unit issues a warning to the user when a candidate selected by the user using the GUI causes inconsistency in syntax of the constraint condition being created.

(25) The information processing apparatus according to any one of (22) to (24), wherein

the constraint condition includes a constraint term and an objective term, and

the model creating unit causes the user to create the constraint term and the objective term.

(26) The information processing apparatus according to any one of (19) to (25), further comprising

a converter that generates the mathematical formula from the combinational optimization problem model.

(27) The information processing apparatus according to any one of (19) to (26), further comprising

a control unit that acquires a solution of the mathematical formula by inputting the mathematical formula to a solver suitable for solving the mathematical formula.

(28) An information processing method executed in an information processing apparatus connectable to a predetermined network, the method comprising

estimating, from among two or more solvers, a solver suitable for solving a mathematical formula generated from a combinational optimization problem model.

(29) A program for causing a processor included in an information processing apparatus connectable to a predetermined network to function, the program causing the processor to execute

estimating, from among two or more solvers, a solver suitable for solving a mathematical formula generated from a combinational optimization problem model.

(30) An information processing system comprising a server and a client connected via a predetermined network, the system comprising:

a model creating unit that creates a combinational optimization problem model on the basis of a combinational optimization problem;

a converter that generates a mathematical formula from the combinational optimization problem model;

an inference unit that estimates a solver suitable for solving the mathematical formula from among two or more solvers; and

a control unit that acquires a solution of the mathematical formula by inputting the mathematical formula to a solver suitable for solving the mathematical formula.

(31) The information processing system according to (30), in which

the model creating unit and the converter are arranged in the client.

(32) The information processing system according to (30), in which

the model creating unit and the converter are arranged in the server, and

a user accesses the server via the client to create the combinational optimization problem model on the basis of the combinational optimization problem, and generates the mathematical formula from the combinational optimization problem model.

(33) The information processing system according to any one of (30) to (32), further comprising a learning unit that inputs the mathematical formula into a solver suitable for solving the mathematical formula to improve accuracy of the solver on the basis of the solution of the mathematical formula obtained from the solver.

Reference Signs List

1 INFORMATION PROCESSING SYSTEM
10 SERVER
11 DATABASE
12, 12a, 12b,... CLIENT
13 NETWORK
101 EXISTING COMBINATIONAL OPTIMIZATION PROBLEM MODEL
102 CREATED COMBINATIONAL OPTIMIZATION PROBLEM MODEL
103 SET OF COMBINATIONAL OPTIMIZATION PROBLEM MODELS
104 SEQUENTIALLY SELECT COMBINATIONAL OPTIMIZATION PROBLEM MODEL
105, 205 COMBINATIONAL OPTIMIZATION PROBLEM MODEL
106, 206 COMPILER
107, 207 ISING MODEL
108 to 110, 605 ISING MACHINE
111 to 113, 223 SOLUTION
114, 214 CONFIGURATION OF PROBLEM MODEL
115, 215 PROBLEM SCALE AND COMPLEXITY
116, 216 UPDATING OF LEARNING MODEL
117 LEARNED MODEL
201 COMBINATIONAL OPTIMIZATION PROBLEM
202 CREATE COMBINATIONAL OPTIMIZATION PROBLEM MODEL IN PROGRAMMING LANGUAGE
203 CREATE COMBINATIONAL OPTIMIZATION PROBLEM MODEL USING GUI
220 INFERENCE UNIT
221 ISING MACHINE SELECTION INFORMATION
222 SOLVING OF PROBLEM
301 to 307 REGION
401 to 405, 412, 413 INPUT FIELD
501, 511, 521, 531 INPUT DATA
502, 512, 522, 532 CONSTRAINT CONDITION
601 MODEL CREATION & COMPILATION
602 ISING MACHINE SELECTION
604 SOLVING OF PROBLEM
606 UPDATING OF LEARNING MODEL
611, 631 REMOTE CONNECTION
621 RECEPTION OF SOLUTION

**Claims**

1. An information processing apparatus comprising an inference unit that estimates, from among two or more solvers, a solver suitable for solving a mathematical formula generated from a combinational optimization problem model.

2. The information processing apparatus according to claim 1, wherein
the inference unit uses a configuration of the combinational optimization problem model and a scale and complexity of the combinational optimization problem model as inputs to estimate the solver suitable for solving the mathematical formula.

3. The information processing apparatus according to claim 2, wherein

the configuration of the combinational optimization problem model includes a data format and a constraint condition.

4.  The information processing apparatus according to claim 2, wherein
    the scale and complexity of the combinational optimization problem model include at least one of a number of variables and a number of interactive coefficients constituting the combinational optimization problem model.

5.  The information processing apparatus according to claim 1, wherein
    the inference unit is a processing unit that estimates the solver suitable for solving the mathematical formula using a learned model using machine learning or a statistical method.

6.  The information processing apparatus according to claim 1, wherein
    the two or more solvers include at least one of a quantum annealer, a non-quantum annealer, a non-annealing Ising machine, and a gate quantum-type computer.

7.  The information processing apparatus according to claim 1, further comprising
    a converter that generates the mathematical formula from the combinational optimization problem model.

8.  The information processing apparatus according to claim 1, wherein
    the mathematical formula is quadratic unconstrained binary optimization (QUBO).

9.  The information processing apparatus according to claim 1, further comprising
    a learning unit that inputs the mathematical formula into the solver suitable for solving the mathematical formula to improve accuracy of the inference unit on a basis of a solution of the mathematical formula obtained from the solver.

10. The information processing apparatus according to claim 9, wherein
    in a case where a plurality of mathematical formulas can be generated from the combinational optimization problem model, the learning unit inputs each of the mathematical formulas generated from the combinational optimization problem model to the solver suitable for the solving, to improve the accuracy of the inference unit on a basis of a solution of each of the mathematical formulas obtained from the solver.

11. The information processing apparatus according to claim 1, further comprising
    a control unit that acquires a solution of the mathematical formula by inputting the mathematical formula to the solver suitable for solving the mathematical formula.

12. The information processing apparatus according to claim 1, further comprising
    a model creating unit that creates the combinational optimization problem model on a basis of a combinational optimization problem.

13. The information processing apparatus according to claim 12, wherein
    the model creating unit provides a user with an environment for describing the combinational optimization problem model in a programming language.

14. The information processing apparatus according to claim 12, wherein
    the model creating unit provides a user with a graphical user interface (GUI) for creating the combinational optimization problem model or assisting creation of the combinational optimization problem model.

15. The information processing apparatus according to claim 14, wherein

    the GUI presents a candidate that can be set as a constraint condition of the combinational optimization problem model to the user for each item, and
    the model creating unit creates a syntax describing the constraint condition on a basis of a candidate for each of the items selected from among the candidates presented by the GUI.

16. The information processing apparatus according to claim 15, wherein
    the GUI presents candidates that can be set as the constraint condition to the user according to an order of items constituting a syntax describing the constraint condition.

17. The information processing apparatus according to claim 15, wherein

the model creating unit issues a warning to the user when a candidate selected by the user using the GUI causes inconsistency in syntax of the constraint condition being created.

18. An information processing apparatus connected to the information processing apparatus according to claim 1 via a predetermined network, the information processing apparatus comprising
a model creating unit that creates the combinational optimization problem model on a basis of a combinational optimization problem.

19. An information processing method executed in an information processing apparatus connectable to a predetermined network, the method comprising
estimating, from among two or more solvers, a solver suitable for solving a mathematical formula generated from a combinational optimization problem model.

20. A program for causing a processor included in an information processing apparatus connectable to a predetermined network to function, the program causing the processor to execute
estimating, from among two or more solvers, a solver suitable for solving a mathematical formula generated from a combinational optimization problem model.

# FIG.1

# FIG.2

102
CREATED COMBINATIONAL
OPTIMIZATION PROBLEM
MODEL

101
EXISTING COMBINATIONAL
OPTIMIZATION PROBLEM
MODEL

SET OF
COMBINATIONAL
OPTIMIZATION
PROBLEM MODELS ~103

SEQUENTIALLY SELECT COMBINATIONAL
OPTIMIZATION PROBLEM MODEL ~104

COMBINATIONAL OPTIMIZATION
PROBLEM MODELS ~105

106
COMPILER

114
CONFIGURATION OF
PROBLEM MODEL

107~ ISING MODEL

115
PROBLEM SCALE
AND COMPLEXITY

108
ISING MACHINE

109
ISING MACHINE

110
ISING MACHINE

116
UPDATING OF
LEARNING MODEL

111
SOLUTION

112
SOLUTION

113
SOLUTION

117~ LEARNED
MODEL

CONVERGENCE CURVE OF
SOLUTION/FINAL SOLUTION

# FIG.3

201 — COMBINATIONAL OPTIMIZATION PROBLEM

202 — CREATE COMBINATIONAL OPTIMIZATION PROBLEM MODEL IN PROGRAMMING LANGUAGE

203 — CREATE COMBINATIONAL OPTIMIZATION PROBLEM MODEL USING GUI

205 — COMBINATIONAL OPTIMIZATION PROBLEM MODEL

206 — COMPILER

214 — CONFIGURATION OF PROBLEM MODEL

207 — ISING MODEL

215 — PROBLEM SCALE AND COMPLEXITY

216 — UPDATING OF LEARNING MODEL

220 — INFERENCE UNIT

LEARNED MODEL

117

222 — SOLVING OF PROBLEM

221 — ISING MACHINE SELECTION INFORMATION

223 — SOLUTION

CONVERGENCE CURVE OF SOLUTION/FINAL SOLUTION

# FIG.4

| ELEMENT | | NUMBER DESIGNATED | STRENGTH OF TERM | EXAMPLE |
|---|---|---|---|---|
| DATA FORMAT | INPUT DATA FORMAT | ONE OR MORE | ALWAYS SATISFY | ·GRAPH<br>·SET<br>·LIST/TABLE |
| | SOLUTION FORMAT | ONE OR MORE | ALWAYS SATISFY | ·PATH OF GRAPH<br>·SUBSET<br>·NUMERICAL VALUE |
| CONSTRAINT CONDITION | CONSTRAINT TERM | 0 OR MORE | ALWAYS SATISFY | ·GRAPH (BECOMES) DIRECTED CYCLE GRAPH<br>·EACH NODE (HAS) ONE VALUE<br>·NODES AT BOTH ENDS OF EDGE (HAVE) DIFFERENT VALUES |
| | OBJECTIVE TERM | 0 TO 1 | SATISFY AS MUCH AS POSSIBLE | ·SUM (OF) DISTANCES (OF) EDGE (IS) MINIMUM<br>·NUMBER OF VERTICES (OF) PARTIAL GRAPH (IS) MAXIMUM<br>·SUM (OF) WEIGHTS (OF) EDGE (IS) MAXIMUM |

EP 4 542 459 A1

# FIG.5

| SELECTION | ISING MACHINE | APPROPRIATENESS (SCORE) |
|---|---|---|
|  | ISING MACHINE X | 0.68 |
| ✓ | ISING MACHINE Y | 0.91 |
|  | ISING MACHINE Z | 0.43 |

# FIG.6

# FIG.7

(A) ─ GRAPH BECOMES DIRECTED CYCLE GRAPH
─ constraint(directed_cycle_graph(graph_x))

CONSTRAINT    DIRECTED        TARGET
TERM          CYCLE GRAPH     GRAPH

(B) ─ MINIMIZE SUM OF WEIGHTS (DISTANCES) OF EDGE
─ objective(minimize(sum(weight(graph_x))))

OBJECTIVE           SUM              TARGET
TERM     MINIMIZE        WEIGHTS    GRAPH

# FIG.8

CONSTRAINT CONDITION
- OBJECTIVE TERM: SUM OF DISTANCES BETWEEN NODES TO BE FOLLOWED IS MINIMUM
- CONSTRAINT TERM: PATH FOLLOWING NODES → ORDER OF NODE IS TWO, PATH FORMS CYCLE

(1) TERM SELECTION ▼

(2) OBJECTIVE TERM ▼ | WHAT? ▼ | IS SET TO | WHAT? ▼

(3) OBJECTIVE TERM ▼ | SUM ▼ OF WHAT? ▼ | IS SET TO | MINIMUM ▼

(4) OBJECTIVE TERM ▼ | SUM ▼ OF WEIGHTS ▼ OF WHAT? ▼ | IS SET TO | MINIMUM ▼

(5) OBJECTIVE TERM ▼ | SUM ▼ OF WEIGHTS ▼ OF graph_x ▼ | IS SET TO | MINIMUM ▼

401    403    404    405    402

# FIG.9

CONSTRAINT CONDITION
- OBJECTIVE TERM: SUM OF DISTANCES BETWEEN NODES TO BE FOLLOWED IS MINIMUM
- CONSTRAINT TERM: PATH FOLLOWING NODES → ORDER OF NODE IS TWO, PATH FORMS CYCLE

(1) TERM SELECTION ▼

(2) CONSTRAINT TERM ▼ | WHAT? ▼ | IS NECESSARILY SET TO | WHAT? ▼

(3) CONSTRAINT TERM ▼ | graph_x ▼ | IS NECESSARILY SET TO | PATH FOLLOWING NODES ▼

401    413    412

# FIG.10

graph_x

○ , ● :NODE

——— :EDGE
(UNDIRECTED)

# FIG.11

graph_x

○ :NODE

——— :EDGE
(UNDIRECTED)

# FIG.12

501

502

| OBJECTIVE TERM | SUM OF DISTANCES BETWEEN NODES TO BE FOLLOWED IS MINIMUM |
|---|---|
| CONSTRAINT TERM | PATH FOLLOWING NODES → ORDER OF NODE IS TWO, PATH FORMS CYCLE |

UNDIRECTED GRAPH

# FIG.13

**graph_x**

① ⑤

③

② ④

◯ : NODE

▬ : EDGE (UNDIRECTED)

# FIG.14

OBJECTIVE
TERM

| SUM OF DISTANCES BETWEEN NODES TO BE FOLLOWED IS MINIMUM |

$$A\sum_{v\in|N|}\left(1-\sum_{j\in|N|}x_{v,j}\right)^2 + A\sum_{j\in|N|}\left(1-\sum_{v\in|N|}x_{v,j}\right)^2 + B\sum_{u,v\in E}W_{u,v}\sum_{j\in|N|}x_{u,j}x_{v,j+1}$$

CONSTRAINT
TERM

| PATH FOLLOWING NODES → ORDER OF NODE IS TWO, PATH FORMS CYCLE |

# FIG.15

(A)

```
┌─────────────────────────────────┐
│ graph_x                         │
├─────────────────────────────────┤
│                                 │
│        ①────────→              ⑤ │
│         ↑        ③────→         │
│         │                    ↓  │
│         │                       │
│        ②←────────────────④     │
│                                 │
└─────────────────────────────────┘
```

○ :NODE

→ :EDGE
(DIRECTED)

(B)

CITY →

|   | 1 | 2 | 3 | 4 | 5 |
|---|---|---|---|---|---|
| 1 | 0 | 1 | 0 | 0 | 0 |
| 2 | 1 | 0 | 0 | 0 | 0 |
| 3 | 0 | 0 | 1 | 0 | 0 |
| 4 | 0 | 0 | 0 | 0 | 1 |
| 5 | 0 | 0 | 0 | 1 | 0 |

ORDER OF VISITING CITIES ↓

# FIG.16

511

512

| UNDIRECTED GRAPH | OBJECTIVE TERM | EACH NODE IS COLORED ONLY IN ONE TYPE (ONE VALUE) |
| CHROMATIC NUMBER | CONSTRAINT TERM | BOTH ENDS OF EDGE HAVE DIFFERENT COLORS (VALUES) |

# FIG.17

OBJECTIVE TERM — EACH NODE IS COLORED ONLY IN ONE TYPE (ONE VALUE)

$$A\sum_{v\in[N]}\left(1-\sum_{j\in[N]}x_{v,j}\right)^2 + B\sum_{u,v\in E}\sum_{i\in[N]}x_{u,i}x_{v,i}$$

CONSTRAINT TERM — BOTH ENDS OF EDGE HAVE DIFFERENT COLORS (VALUES)

# FIG.18

(A)

graph_x

⬤, ▨, ⬛ :NODE

━━━━━ :EDGE
(UNDIRECTED)

(B)

NODE

|     | 1 | 2 | 3 | 4 | 5 | 6 |
|-----|---|---|---|---|---|---|
| 1   | 1 | 0 | 0 | 0 | 1 | 0 |
| 2   | 0 | 1 | 0 | 0 | 0 | 1 |
| 3   | 0 | 0 | 1 | 1 | 0 | 0 |

COLOR TO BE ASSIGNED

# FIG.19

521

UNDIRECTED GRAPH

522

| OBJECTIVE TERM | NUMBER OF VERTICES OF PARTIAL GRAPH IS MAXIMUM |
| CONSTRAINT TERM | PARTIAL GRAPH FORMS CLIQUE |

# FIG.20

OBJECTIVE TERM — NUMBER OF VERTICES OF PARTIAL GRAPH IS MAXIMUM

$$-\sum_{v\in V} x_v + \begin{cases} \text{METHOD 1}: A\displaystyle\sum_{(i,j)\in\bar{E}} x_i x_j \\[2em] \text{METHOD 2}: A\left(1-\displaystyle\sum_{i=2} y_i\right)^2 + A\left(\displaystyle\sum_{i=2} iy_i - \sum_{v\in V} x_v\right)^2 + B\left[\frac{1}{2}\left(\displaystyle\sum_{i=2} iy_i\right)\left(\displaystyle\sum_{i=2} iy_i - 1\right) - \sum_{(u,v)\in E} x_u x_v\right] \end{cases}$$

CONSTRAINT TERM — PARTIAL GRAPH FORMS CLIQUE

# FIG.21

◯ :NODE

— :EDGE
(UNDIRECTED)

# FIG.22

S

◯ :NODE

— :EDGE
(UNDIRECTED)

# FIG.23

| i | 2 | 3 | 4 | 5 | 6 |
|---|---|---|---|---|---|
| $y_i$ | 0 | 0 | 0 | 1 | 0 |

$\rightarrow 5$

# FIG.24

(A)

graph_x

○ , ● : NODE

——— : EDGE
(UNDIRECTED)

(B)

NODE →

| 1 | 2 | 3 | 4 | 5 | 6 |
|---|---|---|---|---|---|
| 1 | 1 | 0 | 0 | 1 | 0 |

# FIG.25

531

532

UNDIRECTED GRAPH → OOBJECTIVE TERM | SUM OF WEIGHTS OF EDGES TO BE CUT IS MAXIMUM

# FIG.26

# FIG.27

(A)

graph_x

○, ● :NODE

——— :EDGE (UNDIRECTED)

(B)

NODE →

| 1 | 2 | 3 | 4 | 5 |
|---|---|---|---|---|
| 1 | -1 | 1 | -1 | -1 |

# FIG.28

# FIG.29

# FIG.30

# FIG.31

# FIG.32

COMPUTER ~1000

CPU ~1100

RAM ~1200

ROM ~1300

~1050

HDD ~1400

PROGRAM DATA ~1450

COMMUNICA-TION INTERFACE ~1500

INPUT/OUTPUT INTERFACE ~1600

~1550

INPUT/OUTPUT DEVICE ~1650

## INTERNATIONAL SEARCH REPORT

| International application No. |
| --- |
| **PCT/JP2023/019999** |

**A. CLASSIFICATION OF SUBJECT MATTER**

*G06N 10/60*(2022.01)i; *G06N 99/00*(2019.01)i; *G06Q 10/04*(2023.01)i
FI: G06N10/60; G06N99/00 180; G06Q10/04

According to International Patent Classification (IPC) or to both national classification and IPC

**B. FIELDS SEARCHED**

Minimum documentation searched (classification system followed by classification symbols)

G06N3/00-99/00; G06Q10/04-10/047; G06F17/10-17/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022/091408 A1 (NEC CORP.) 05 May 2022 (2022-05-05) claims 1-9, paragraphs [0023]-[0027], [0033]-[0070], [0077], fig. 1, 9 | 1-2, 4-8, 11, 19-20 |
| Y | | 12-14, 18 |
| A | | 3, 9-10, 15-17 |
| Y | JP 2021-163474 A (FUJITSU LTD.) 11 October 2021 (2021-10-11) paragraphs [0015]-[0028], [0043], [0051], [0055]-[0094], fig. 1-4B | 12-14, 18 |
| A | | 15-17 |
| Y | 小津 泰生, アニーリングマシン向けプログラミング言語, 第82回(2020年)全国大会講演論文集 (1), 一般社団法人情報処理学会, 2020, pp. 1-181, 1-182, (OZU, Taisei. Programming language for annealing machine.), non-official translation (Proceedings of the 82nd (2020) National Conference (1), Information Processing Society of Japan.) chapter 1 | 13 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 August 2023** | **22 August 2023** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2023/019999**

## C. DOCUMENTS CONSIDERED TO BE RELEVANT

| Category* | Citation of document, with indication, where appropriate, of the relevant passages | Relevant to claim No. |
|---|---|---|
| A | 棚橋 耕太郎, アニーリングマシンの活用とソフトウェアツールの紹介, DA シンポジウム2021論文集 [online], vol. 2021, 情報処理学会, 2021, pp. 134-141, [retrieved on 01 September 2021], Internet: <URL: https://ipsj.ixsq.nii.ac.jp/ej/?action=repository_uri&item_id=212640&file_id=1&file_no=1>, (TANAHASHI, Kotaro. Application of Annealing Machines and the Software Tools for Implementations. Proceedings of Design Automation Symposium 2021 [online], Information Processing Society of Japan.) chapter 3 | 1-20 |
| A | HEVIA, Jose Luis et al. A New Path to Create Solutions for Quantum Annealing Problems. Journal of Quantum Information Science [online]. 2021, vol. 11, pp. 112-123, [retrieved on 09 August 2023], Internet: <URL: https://www.scirp.org/pdf/jqis_2021091509415933.pdf>, <DOI:10.4236/jqis.2021.113009> chapters 4, 5 | 14-17 |

Form PCT/ISA/210 (second sheet) (January 2015)

<div style="text-align: center">

**INTERNATIONAL SEARCH REPORT**
Information on patent family members

</div>

| International application No. |
|---|
| **PCT/JP2023/019999** |

| Patent document cited in search report | | | Publication date (day/month/year) | Patent family member(s) | Publication date (day/month/year) |
|---|---|---|---|---|---|
| WO | 2022/091408 | A1 | 05 May 2022 | (Family: none) | |
| JP | 2021-163474 | A | 11 October 2021 | US 2021/0303704 A1 paragraphs [0025]-[0038], [0053], [0061], [0065]-[0104], fig. 1-4 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016199220 A